(19)

**Europäisches Patentamt**
**European Patent Office**
**Office européen des brevets**

(11) **EP 4 614 458 A1**

(12) **EUROPEAN PATENT APPLICATION**

(43) Date of publication:
**10.09.2025 Bulletin 2025/37**

(21) Application number: **24188308.1**

(22) Date of filing: **12.07.2024**

(51) International Patent Classification (IPC):
**G06V 10/82** (2022.01)       **G06T 7/246** (2017.01)

(52) Cooperative Patent Classification (CPC):
**G06V 10/82; G06T 7/246;** G06T 2207/10016;
G06T 2207/10116; G06T 2207/20081;
G06T 2207/20084

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **05.03.2024 US 202463561358 P**

(71) Applicant: **Siemens Healthineers AG**
**91301 Forchheim (DE)**

(72) Inventors:
• **Islam, Saahil**
**91052 Erlangen (DE)**

• **NarasimhaMurthy, Venkatesh**
**Hillsborough, NJ, 08844 (US)**
• **Neumann, Dominik**
**91052 Erlangen (DE)**
• **Cimen, Serkan**
**West Orange, NJ, 07052 (US)**
• **Sharma, Puneet**
**Princeton Junction, NJ, 08550 (US)**
• **Comaniciu, Dorin**
**Princeton, NJ, 08540 (US)**
• **Ghesu, Florin-Cristian**
**91083 Baiersdorf (DE)**

(74) Representative: **Schwarz, Claudia**
**Schwarz + Kollegen**
**Patentanwälte**
**Heilmannstraße 19**
**81479 München (DE)**

(54) **TECHNIQUE FOR TRACKING OBJECTS IN MEDICAL IMAGING TIME SERIES**

(57)    The invention relates to a technique for tracking an object in a real-time time series of medical images. A method, performed by a downstream neural network, NN, comprises receiving (S102) a real-time time series (702; 704) of medical images of a patient's anatomical region at an input layer of the NN. Using a spatio-temporal encoder (204), the real-time time series is encoded (S104), and an encoded representation per frame is obtained. A frame corresponds to a medical image at a time instance within the real-time time series of medical images. Using a multi-head cross-attention, MCA, decoder (208), the encoded representation of a most recent frame (702) is decoded (S108). The MCA decoder (208) correlates the most recent frame (702) with a predefined number of preceding frames (704). An object is tracked (S110). The tracking (S110) comprises determining coordinates of the object based on the decoded (S108) most recent frame (702).

FIG 13

EP 4 614 458 A1

**Description**

The present invention relates to a technique for for tracking an object in a (e.g., real-time) time series of medical images, in particular comprising a method, a downstream neural network (NN) system, a training system comprising the downstream NN system, a computer program product, and a computer-readable storage medium.

A clear and stable visualization of a stent is crucial for coronary interventions. Stent enhancement is highly valuable specifically for estimating stent position for under-expansion, stent failure, intraprocedural stent disruption and treatment of aorto-ostial and bifurcation lesions [8]. Tracked Balloon markers can be used as anchor points to stabilize and enhance the stent visualization by superimposing consecutive sequence images based on the balloon marker position. [9]. Tracking of the catheter tip on the other hand provides an anchor point to map vessel information between fluoroscopy and angiography images, thus reducing the amount of contrast needed for visualizing vessel structures [13]. Additionally, it can assist in the placement of stents and balloons for catheterized interventions.

Tracking such small objects poses challenges in angiography due to complex scenes caused by vessel structures, and in low-dose fluoroscopy due to noisy images amid additional obstructions from other devices. Furthermore, the cardiac, respiratory and the motion of the device itself aggravate these challenges.

In recent years, various approaches have emerged for tracking in both natural and X-ray images. Many tracking methods in natural images employ Siamese architectures to extract features from two different crops (a search and a template frame) and correlate them to accommodate changes in appearance [5, 20, 21]. Recently, transformers have been integrated into these approaches, such as Stark [19] and Mixformer [3]. Other methods incorporate a historical trajectory to integrate information from previous predictions, facilitating object motion prediction [18, 12].

In X-ray device tracking, various approaches have been explored. To address the lack of annotated frames, semi-supervised methods like Cycle Ynet [11] have been utilized. Other works have adopted Siamese-based architectures similar to those in natural image object tracking [2, 10]. ConTrack [4] combines a Siamese architecture with a transformer-based feature fusion model and optical flow to incorporate contextual spatio-temporal information. Self-Supervised Learning (SSL) approaches in both images and videos have gained popularity in recent times showing how pretraining can boost the performance in downstream tasks. [6, 16, 15, 14, 7, 17]. FIMAE [1] uses a masked image modeling (MIM) based SSL method with symmetrical masking to reduce space-time redundancies and asymmetrical masking to facilitate the learning of inter-frame correspondence for device tracking. The approach further combines the spatial feature extraction and feature fusion modules into one using a pretrained spatio-temporal encoder to have a simple tracking framework. The tracking model employed by FIMAE is also denoted as SimST.

However, FIMAE [1] emphasizes reconstruction of the entire image, assigning equal importance to every part of the image/frame, and not distinguishing between objects and background. However, objects such as the catheter body typically occupy less than 1 % of the total area of the frame, while vessel structures typically cover approximately 8% of the frame's total area during sufficient contrast. While effective in reducing redundancy, the FIMAE approach may overlook important features crucial for spatial and temporal understanding, due to high masking ratio. Additionally, focusing solely on pixel-space reconstruction limits the network's ability to learn features based on multiple representation spaces. Furthermore, all device tracking methodologies, including SimST, employ asymmetrical cropping, which removes natural motion information and relies heavily on spatial correlation. Such asymmetrical cropping not only adds artificial motion, but also restricts tracked.

A conventional technical challenge in object tracking, such as device tracking, is the necessity for artificial intelligence (AI) systems to possess a deep understanding of motion in interventional image analytics, particularly in the context of invasive coronary angiography assessment using X-ray angiography data. A critical and demanding application of such a system involves tracking devices, which requires a comprehensive grasp of spatio-temporal features and subtle temporal changes to navigate through occlusions induced by vessels and other devices.

Conventional approaches typically address the task at the frame level, relying on the network to comprehend motion based on multiple frame inputs, and through spatial feature matching between past and current frames in angiography sequences. However, the conventional tracking frameworks employ asymmetrical cropping, removing natural underlying motion in the sequences, and depend on background removal techniques to achieve suitable feature matching. Furthermore, these tracking approaches struggle to track devices that have more than one component (or instance), such as pairs of balloon markers, that are needed to be detected at a time. Moreover, the conventional models struggle to detect more than one instance (or component). Due to lack of good spatial-temporal understanding in the tracking framework, they often detect other parts in the image as the object that they are trying to track. This conventional mis-detection is due to a high reliance on only spatial feature matching.

Moreover, although SSL methods on sequential data have demonstrated their ability to learn features beneficial for downstream tasks, they often operate solely within a single representation space, such as the pixel space, without clear differentiation between specific objects in the scene.

Conventional approaches for SSL employ masked image modeling techniques, where a substantial portion of the input image is removed to focus on learning the omitted regions. This approach aids in reducing redundancies within the image data while emphasizing important features.

Similarly, in conventional tracking frameworks, a common strategy involves utilizing a small crop around previous frame predictions and applying spatial correlation with the current frame to track the object of interest. However, despite the largely unexploited potential of some tracking methods to leverage pretrained spatio-temporal encoders (e.g., a tracking method that was previously developed internally), the conventional asymmetrical cropping used in these frameworks results in the loss of natural underlying motion. Although the conventional encoders excel in understanding fine inter-frame correspondence and learning spatial correlation between frames, the suboptimal cropping technique hampers their full effectiveness. Therefore, while effective to a certain extent, these frameworks may not achieve optimal performance.

It is therefore an object of the present invention to provide a solution for improved tracking of (in particular small) objects within sequences (and/or time series) of medical images. Alternatively or in addition, an objective technical problem is to improve tracking of multiple objects (and/or multiple components of an object), improve tracking in the presence of motion (such as due to a patient's respiratory and/or cardiac cycle, and/or due to the movement of a surgical instrument, such as a catheter tip), and/or improve tracking in the presence of occlusions (also: obstructions) and/or noise.

This object is solved by a method for tracking an object in a (e.g., real-time) time series of medical images, by a downstream NN system, by a training system comprising the downstream NN system, by a computer program (and/or computer program product), and by a computer-readable storage medium according to the appended independent claims. Advantageous aspects, features and embodiments are described in the dependent claims and in the following description together with advantages.

In the following, the solution according to the invention is described with respect to the claimed method as well as with respect to the claimed downstream NN system. Features, advantages or alternative embodiments herein can be assigned to the other claimed objects (e.g., training system, the computer program or a computer program product), and vice versa. In other words, claims for the downstream NN system can be improved with features described or claimed in the context of the method. In this case, the functional features of the method are embodied by structural units of the downstream NN system and vice versa, respectively.

As to a method aspect, a (e.g., computer-implemented) method for tracking an object in a (e.g., real-time) time series of medical images is provided. The method may be performed by a downstream neural network (NN). The method comprises a step of receiving a (e.g., real-time) time series of medical images of a patient's anatomical region at an input layer of the downstream NN. The method further comprises a step of encoding, using a spatio-temporal encoder of the downstream NN, the received (e.g., real-time) time series of medical images and obtaining an encoded representation per frame of the received (e.g., real-time) time series. A frame corresponds to a medical image at a time instance within the (e.g., real-time) time series of medical images. The method further comprises a step of decoding, using a multi-head cross-attention (MCA) decoder of the downstream NN, the obtained encoded representation of a most recent frame of the received (e.g., real-time) time series. The MCA decoder correlates the most recent frame with a predefined (e.g., four or five) number of preceding frames within the received (e.g., real-time) time series. The method still further comprises a step of tracking at least one object comprised in the (e.g., real-time) time series of medical images. The tracking comprises determining coordinates of the at least one object within an image plane based on the decoded most recent frame.

By the inventive technique, tracking an object within a video stream or other time series of medical images in (e.g., real-time; also: live) can be improved. Thereby a visual cue support during an interventional procedure (also: surgical procedure) can be improved, resulting in more precise and faster performance of the interventional procedure. For example, a visibility of one or more stents can be improved, a navigation can be improved in precision, and/or a detection and co-registration of vessel structures can be improved, leading to an improved tracking of a catheter tip and/or balloon markers used during the interventional procedure for visualization of relevant structures and/or for optical guidance.

The inventive technique can in particular improve on the tracking of motions (such as motions of anatomical structures, e.g., during a cardiac cycle and/or a respiratory cycle), on the tracking in the presence of occlusions (also: obstructions, such as due to larger anatomical structures and/or further objects, such as implants occluding and/or obstructing a view onto a catheter tip) and on the tracking in the presence of noise (e.g., due to a motion of anatomical structures, such as cardiac and/or respiratory motion, of the at least one object, and/or of a medical imaging device recoding the real-time time series of medical images), other distracting objects and/or anatomical structures.

Moreover, anatomical abnormalities (e.g., stenosis, one or more blocked arteries due to plaque, and/or a tumor) may lead to an inconsistent contrast uptake, thereby requiring an increased tracking precision.

The inventive technique is more generic than conventional tracking techniques, enabling to track more than one object (or more than one instance or component of an object) simultaneously, providing high precision and high robustness in detecting and tracking the one or more objects, in particular in real-time. For example, at least two different surgical instruments used simultaneously can be tracked as at least two objects. Alternatively or in addition, a pair of balloon markers may correspond to two different objects, tracked commonly and/or simultaneously even though the two balloon markers are located at the two ends of the same balloon.

The tracking of the object in the real-time time series may refer to tracking the object based on the most recent frame (e.g., displayed) within the time series.

In one embodiment, real-time (also: live) may refer to the time series being acquired, such as during an interventional procedure, and the most recent frame is the latest frame acquired, with further frames to be acquired as the time series continues. Thereby, optical guidance during the ongoing interventional procedure is enabled.

In another embodiment, the time series (also: video stream) may have been (e.g., fully) acquired prior to the object tracking. The time series may be analysed (and/or displayed) on a frame-by-frame basis. The most recent frame may, e.g., refer to the latest frame displayed. Thereby, a retrospective tracking of the object may be enabled, e.g., for educational purposes and/or verification, such as controlling the successful completion of an interventional procedure upon revisiting the acquired time series. This embodiment may be combined with the previous embodiment, e.g., by reviewing the time series, that was used for optical guidance during the interventional procedure, later again.

The most recent frame, the predefined number of preceding frames, and/or the (e.g., real-time) tracking of the object may be independent of a speed of acquiring the frames and/or of displaying the time series.

The visualisation may, e.g., comprise an X-ray angiography or (in particular live) fluoroscopy.

The interventional procedure may, e.g., comprise an angioplasty procedure.

By improving the tracking performance of the at least one object, a need for contrast or for administering a contrast agent to a patient undergoing the interventional procedure may be reduced.

The at least one object to be tracked may comprise a single object, such as a catheter tip, or multiple objects or instances (also: components) of an object, such as a pair of balloon markers, which may for example mark the two ends of a balloon inserted into a vessel. Alternatively or in addition, the at least one object may comprise one or more predicted landmarks.

Tracked objects, such as balloon markers, can for example be used for registering frames for clear stent visualization and/or as anchors for co-registering vessel structures.

The real-time time series of medical images may comprise one frame per time instance. The encoding and/or decoding may be performed on a subset of the frames, such as on a predetermined number (e.g., five) of the most recent received frames. The frames, on which the encoding and/or decoding is performed, may be consecutive or may be selected according to a predetermined rule (e.g., only every second frame, or more generally only every N-th frame with N at least two).

The encoded representation (also: embedded representation, latent feature representation or latent representation) may be a representation in latent space, in feature space and/or reduced in dimensionality compared to a pixel representation of the frame.

The predefined number of preceding frames may comprise the most recent consecutive frames within the received (e.g., real-time) time series. Alternatively or in addition, the predefined number of preceding frames may be between two and ten, preferably between three and seven, and more preferably four or five.

The frames of the (e.g., real-time) time series may be uncropped or symmetrically cropped. A symmetrical cropping may correspond to cropping the same pixels (and/or the same spatial regions) from each frame (or each frame within a subset of frames, such as the predefined number of preceding frames correlated with the most recent frame) within the (e.g., real-time) time series. Alternatively or in addition, a symmetrical cropping may comprise applying the same cropping parameters to all (in particular the most recent and the predefined number of preceding) frames within the time series.

By contrast, a conventional asymmetric cropping may correspond to cropping different pixels (and/or different spatial regions) for different frames, such as due to different identified regions of interest (RoI), or cropping always around an object, which moves through the image plane.

The spatio-temporal encoder may encode the received (e.g., real-time) time series of medical images without cropping or according to a symmetrical cropping.

The MCA decoder may implement cross-attention on the (e.g. motion-preserved) feature space, in particular for different time instances (and/or different frames). Additionally, the MCA decoder may implement the cross-attention for different pixels and/or different spatial regions (e.g., within the same frame and/or the same RoI, such as obtained by symmetric cropping).

The frames may correspond to channels (also: input channels) of the spatio-temporal encoder and/or of the MCA decoder.

By using multiple (e.g., uncropped or symmetrically cropped) frames for the tracking, a natural motion of the at least one tracked object may be preserved.

The tracking of the at least one object may comprise determining the coordinates of the at least one object within the image plane for the most recent frame, and optionally for the predefined number of preceding frames.

The image plane may be defined by (e.g., all pixels of) an uncropped frame, and/or by (e.g., the pixels within) the cropped area of a (in particular symmetrically) cropped frame.

By the determined coordinates, a location of the at least one object within the image plane may be provided. For example, the location of the at least one object may be highlighted (e.g., by a predetermined graphical object, such as a circle or polygon and/or by a predetermined colour) on a display of the (e.g., real-time) time series. E.g., a surgeon performing the interventional procedure may be displayed the most recent (at any instance in time of the, e.g., real-time, time series) frame on a screen in an operating theatre and/or on a head-mounted display (HMD) or extended reality (XR) headset.

The medical images may be X-ray images. Alternatively or in addition, the medical images may be chest images.

The real-time time series of medical images may be a live video sequence of an X-ray angiography or fluoroscopy. X-ray imaging may be particularly suitable for (e.g., real-time) tracking applications due to a reduced need for memory space and processing power as compared to other medical imaging techniques, e.g., magnet resonance tomography (MRT).

The downstream NN (which may also be denoted as downstream NN system) may be trained to track objects within a predetermined anatomical region, such as a patient's chest. Chest imaging may be suitable for performing interventional procedures at the heart and its surrounding vessels.

By training the downstream NN in relation to a predetermined anatomical region, a precision of tracking may be improved (e.g., due to the downstream NN fast and easily recognizing the relevant anatomical structures) while keeping a required processor capacity and memory space sufficiently low.

The method may further comprise a step of providing the determined coordinates of the tracked at least one object.

The tracked at least one object may be displayed on a display device, such as a screen (e.g., in an operating theatre), a HMD, and/or an XR headset.

The determined coordinates of the tracked at least one object may be provided for display. Alternatively or in addition, the determined coordinates of the tracked at least one object may be provided for controlling the at least one object and/or a further object. E.g., the movement of a tracked surgical instrument, such as a catheter tip, may be controlled based on the determined coordinates. Alternatively or in addition, the movement of a surgical instrument, such as a catheter tip (or catheter), may be controlled based on the determined coordinates of one or more pairs of balloon markers.

The controlling of the (e.g., movement of the) at least one object and/or a further object may be at least partially computer-implemented and/or automated.

The method may further comprise a step of pretraining the spatio-temporal encoder using self-supervised learning (SSL). The SSL may comprise one or more tasks such as determining a cardiac phase, determining a stenosis, and/or determining a vessel segmentation. Performing the one or more SSL tasks may comprise combining the spatio-temporal encoder with a task-specific weak-label decoder for the corresponding SSL task.

The cardiac phase (also: cardiac cycle) may comprise at least one of a systolic phase and a diastolic phase. The SSL task of determining the cardiac phase may be performed by combining the spatio-temporal encoder with a cardiac phase decoder.

Determining a stenosis may comprise determining that a patient suffers from stenosis as well as the position or positions (e.g., the vessels, optionally with the relative distance to the heart or another anatomical structure), where the stenosis occurs. The SSL task of determining the stenosis may be performed by combining the spatio-temporal encoder with a stenosis decoder.

The vessel segmentation may also briefly be denoted as vesselness. The SSL task of determining the vessel segmentation may be performed by combining the spatio-temporal encoder with a vessel segmentation decoder.

The pre-training of any SSL task may be performed on a weakly-labeled training dataset.

In an embodiment, the step of pretraining the spatio-temporal encoder may be preceded by a step of creating a training database for the SSL task, with each training dataset within the training database comprising an automatically generated weak label (also: pseudo label, and/or pseudo-Ground Truth) for an unlabeled training dataset. The weak label may be generated by a separate network trained on automatically generating labels. E.g., vessel segmentation may be performed by a trained U-Net.

The training dataset may comprise a pre-recorded time series of medical images.

Creating the training database may further comprise enhancing the training database, e.g., by performing masking and/or geometrical transformations on existing training datasets.

Performing the pre-training of the spatio-temporal encoder by means of the SSL task may be based on optimizing a task-specific loss function. The task-specific loss function may be an L2-loss function, an L1-loss function, and/or a soft dice loss function, in particular independently for each task (e.g., the loss functions for the tasks of vessel segmentation, stenosis determination, and/or cardiac phase determination may differ and be selected independently for each of the three tasks).

Pre-training the spatio-temporal encoder using the weak labels may correspond to leveraging supplementary cues in order to improve the performance of the spatio-temporal encoder. By the supplementary spatial cues and motion cues, a feature learning across different representation spaces can advantageously be enabled.

By the pre-training, the spatio-temporal encoder may learn space-time features of time series of medical images. Alternatively or in addition, pre-training and/or training the spatio-temporal encoder may comprise training multi-head attention layers for joint space-time attention.

Alternatively or in addition to the one or more SSL tasks, the spatio-temporal encoder may be pretrained on a reconstruction task, such as using training datasets where masking was performed.

The spatio-temporal encoder may be pre-trained by performing a reconstruction task. Performing the reconstruction task may comprise combining the spatio-temporal encoder with a reconstruction decoder.

The spatio-temporal encoder may be pretrained on at least one SSL task in combination with the reconstruction task. Thereby, the spatio-temporal encoder may be pretrained for enhanced performance on a plurality of representation spaces, such as not only the conventional pixel space (e.g., for the reconstruction task), but also stenosis determination space, vesselness space, and cardiac phase space.

In the pretraining phase, the task specific SSL decoder and/or the reconstruction decoder may receive masked tokens as further input in addition to the encoded representations output by the spatio-temporal encoder. The masked tokens may, e.g., comprise tokenized spatial coordinates and/or sine (or cosine) embeddings.

An input to the spatio-temporal encoder may be subject to masking, in particular to tube masking and/or frame masking.

The masked tokens may correspond to the tokens that were masked at the spatio-temporal encoder (briefly also: the encoder). For example, if 40 tokens are masked at the encoder, then 40 masked tokens exist, and each of these tokens will be added with a positional encoding that corresponds to the position it originally belonged to.

Tube masking may comprise masking a (e.g., randomly) preselected set of pixels throughout the time series (e.g., up to 75% of all pixels per frame).

Frame masking may comprise masking (e.g., randomly) frames within the time series (e.g., up to 98% of the frames within the time series).

By the (in particular tube and/or frame) masking, pre-training the combination of spatio-temporal encoder and any one of the decoders (e.g. an SSL task decoder and/or the reconstruction decoder) can be improved.

The spatio-temporal encoder may have a transformer encoder architecture.

Any one of the decoders (e.g. a SSL task decoder and/or the reconstruction decoder) may have a transformer decoder architecture.

The encoder architecture may be independent of any one of the decoder architectures.

The method may further comprise a step of initializing the tracking of the at least one object by applying a trained detection model, which is trained for object detection, on an initial frame of the received (e.g., real-time) time series of medical images.

By the automatic initialization of the tracking using the trained detection model for object detection (briefly: the trained detection model), the tracking may be advantageously fully automatized and/or improved in speed for starting a (e.g., real-time) application, such as optical guidance during an interventional procedure.

The trained detection model may be trained to detect objects, in particular the at least one object to be tracked, in a single frame (and/or a single medical image).

The trained detection model may comprise upsampling convolutional layers.

A single (in particular uncropped) frame may be input into the trained detection model. Alternatively or in addition, for initializing the tracking, multiple copies of the same initial frame may be used. The number of copies may be determined by the predefined number of preceding frames in the decoding step.

In an alternative embodiment, the tracking of the at least one object may be initialized manually.

The at least one object may comprise two or more objects, which are tracked separately. Alternatively or in addition, the at least one object may comprise two or more components (sometimes also denoted as instances) and/or parts of an extended object, which are tracked separately. Optionally, the at least one object comprises two ends of an extended object, with each end tracked separately.

The at least one object may for example comprise two (or more) different surgical instruments, such as catheter tips and/or surgical needles, which are used simultaneously during an interventional procedure. The inventive technique advantageously enables separate tracking of the different surgical instruments, in particular in real-time.

The at least one object may be a part (and/or component) of an extended object. For example, a balloon is an extended objects, which for tracking purposes may have a pair of balloon markers, with each balloon marker at one of the ends of the balloon. Each balloon marker thus corresponds to at least one object, and the pair of balloon markers corresponds to two components (and/or two parts) of the balloon as extended object.

By enabling separate but also simultaneous tracking of more than one object and/or more than one component of an object, a spatial understanding and/or motion tracking may be advantageously improved. Moreover, optical support for interventional procedures using more than one surgical instrument at a time is enabled.

The predefined number of preceding frames may comprise between one and ten frames, preferably between three and eight frames, and more preferably between four and six frames.

By using a low number of frames, which is still sufficiently high for reliably tracking the at least one object, a performance of the technique may be optimized in a time-efficient manner.

The at least one object may comprise a surgical instrument, in particular a catheter tip, a surgical needle, and/or at least one balloon marker.

The method may further comprise a step of symmetrically cropping any frame within the received (e.g., real-time) time series of medical images.

By the symmetrical cropping of the frames, a background to the at least one object is retained and natural motion within the time series is preserved. This may be crucial for leveraging the pretrained spatio-temporal encoder.

Using the MCA decoder, in the decoding step a background may be removed for spatial correlation, and a historical trajectory of the at least one object and/or the decoding based on the predefined number of preceding frames may be applied solely on motion-preserved features.

Thereby, a precise pixel-level prediction is enabled by using the cross-attention of the spatio-temporal features with target specific feature crops and embedded trajectory coordinates.

The method may further comprise a step of performing a further downstream task. Optionally, the further downstream task may comprise determining a stenosis, labelling a branch, determining a phase and/or determining a vessel segmentation.

The further downstream task (also: auxiliary downstream task) may comprise any one the SSL tasks and/or the reconstruction task of the pre-training phase. The further downstream task may for example be performed by the combination ot the trained spatio-temporal encoder with the corresponding trained weak-label decoder and/or reconstruction decoder.

The labelling of a branch may correspond to labelling a branch of vessels, such as pulmonary veins.

Determining a phase (also: detecting a phase) may comprise an electrocardiogram, ECG, phase detection (also: cardiac phase detection) and/or respiratory phase detection.

By performing a further downstream task, a frame interpolation of the spatio-temporal encoder may be improved.

As to a device aspect, a downstream neural network (NN) system (briefly also: downstream NN) for tracking an object in a (e.g., real-time) time series of medical images is provided. The downstream NN system comprises an input layer configured for receiving a (e.g., real-time) time series of medical images of a patient's anatomical region. The downstream NN system further comprises a spatio-temporal encoder configured for encoding the received (e.g., real-time) time series of medical images and obtaining an encoded representation per frame of the received (e.g., real-time) time series. A frame corresponds to a medical image at a time instance within the (e.g., real-time) time series of medical images. The downstream NN system further comprises a multi-head cross-attention (MCA) decoder configured for decoding the obtained encoded representation of a most recent frame of the received (e.g., real-time) time series. The MCA decoder correlates the most recent frame with a predefined number of preceding frames within the received (e.g., real-time) time series. The downstream NN system still further comprises a tracking head configured for tracking at least one object comprised in the time series of medical images. The tracking comprises determining coordinates of the at least one object within an image plane based on the decoded most recent frame.

The downstream NN system may further comprise decoders and/or heads for performing further downstream tasks.

The downstream NN system may be configured to perform the method according to the method aspect. Alternatively or in addition, the downstream NN may comprise any feature disclosed in the context of the method aspect.

As to a system aspect, a training system for training a downstream NN system for tracking an object in a (e.g., real-time) time series of medical images is provided. The training system comprises a spatio-temporal encoder of the downstream NN system according to the device aspect and at least one weak-label decoder and/or a reconstruction decoder.

As to a further aspect, a computer program product is provided comprising program elements which induce a downstream NN system to carry out the steps of the method for tracking an object in a (e.g., real-time) time series of medical images according to the method aspect when the program elements are loaded into a memory of the downstream NN system.

As to a still further aspect, a computer-readable medium is provided, on which program elements are stored that can be read and executed by a downstream NN system, in order to perform steps of the method for tracking an object in a (e.g., real-time) time series of medical images according to the method aspect, when the program elements are executed by the downstream NN system.

The properties, features and advantages of this invention described above, as well as the manner they are achieved, become clearer and more understandable in the light of the following description and embodiments, which will be described in more detail in the context of the drawings.

This following description does not limit the invention on the contained embodiments. Same components or parts can be labeled with the same reference signs in different figures. In general, the figures are not for scale.

It shall be understood that a preferred embodiment of the present invention can also be any combination of the dependent claims or above embodiments with the respective independent claim.

These and other aspects of the invention will be apparent from and elucidated with reference to the embodiments described hereinafter.

BRIEF DESCRIPTION OF THE DRAWINGS

Fig. 1 is a flow chart of a method for tracking an object in a real-time time series of medical images according to a preferred embodiment of the present invention;

Fig. 2 is an overview of the structure and architecture of a downstream neural network (NN) for tracking an object in a real-time time series of medical images according to a preferred embodiment of the present invention;

Figs. 5A and 5B show an example of a pair of balloon markers, which are challenging to track due to occlusions and noise;

Figs. 6A and 6B show an example of a catheter tip, which is challenging to track due to cardiac motion, respiratory motion and the motion of the catheter itsef;

Fig. 7 shows an example of a conventional device tracking technique;

Fig. 8 shows a first embodiment of the inventive tracking technique;

Fig. 9 an example of self-supervised learning (SSL);

Fig. 10 schematically illustrates tube masking and frame masking;

Fig. 11 shows an example architecture of additional representation space, in addition to the conventional pixel space representation, induced cues for enhancing the sequential SSL;

Fig. 12 a further schematic example of training a spatio-temporal encoder for object tracking according to the method of Fig. 1;

Fig. 13 schematically illustrates an embodiment of employing the method of Fig. 1 using the downstream NN of Fig. 2;

Figs. 14A and 14B schematically illustrate conventional asymmetric cropping;

Figs. 15A and 15B schematically illustrate (in particular symmetric) croppings according to the inventive technique;

Fig. 16 schematically illustrates a further example of a rolling window strategy used in the context of the inventive technique;

Figs. 17A, 17B, 17C and 17D show exemplary error distributions of two conventional tracking methods compared to the inventive tracking method for balloon marker and catheter tip tracking without obstructions and with obstructions;

Figs. 18A and 18B show illustrative qualitative example of balloon marker and catheter tip tracking, respectively, using two conventional methods and to variants of the inventive technique; and

Figs. 19A and 19B show further exemplary error plots for balloon marker and catheter tip tracking, respectively, comparing two conventional methods with the inventive technique.

Any reference signs in the claims should not be construed as limiting the scope.

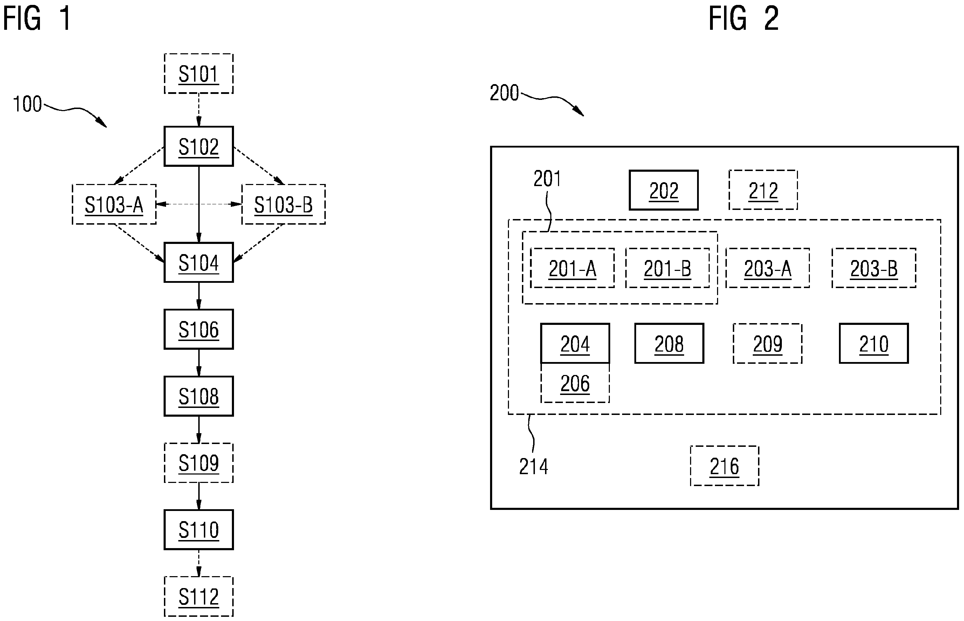

Fig. 1 schematically illustrates an exemplary flowchart for a (in particular computer-implemented) method for tracking an object in a real-time time series of medical images. The method is performed by a downstream neural network (NN) system. The method is generally referred to by the reference sign 100.

The method 100 comprises a step S102 of receiving a real-time time series of medical images of a patient's anatomical region at an input layer of the downstream NN.

The method 100 further comprises a step S104 of encoding, using a spatio-temporal encoder of the downstream NN system, the received S102 real-time time series of medical images. The method 100 further comprises a step S106 of obtaining an encoded representation per frame of the received S102 real-time time series. A frame corresponds to a medical image at a time instance within the real-time time series of medical images.

The method 100 further comprises a step S108 of decoding S108, using a multi-head cross-attention (MCA) decoder of the downstream NN system, the obtained S106 encoded representation of a most recent frame of the received S102 real-time time series. The MCA decoder correlates the most recent frame with a predefined number of preceding frames within the received S102 real-time time series.

The method 100 still further comprises a step S110 of tracking at least one object comprised in the real-time time series of medical images. The tracking S110 comprises determining coordinates of the at least one object within an image plane based on the decoded S108 most recent frame.

Optionally, the method 100 comprises a step S101 of pretraining the spatio-temporal encoder using self-supervised learning (SSL). The SSL may comprise one or more tasks, such as determining a cardiac phase, determining a stenosis, and/or determining a vessel segmentation. Performing the one or more SSL tasks may comprise combining the spatio-temporal encoder with a task-specific weak-label decoder for each SSL task.

The method 100 may comprise a step S103-A of initializing the tracking of the at least one object by applying a trained detection model for object detection on an initial frame of the received S102 real-time time series of medical images.

The method 100 may comprise a step S103-B of symmetrically cropping any frame within the received S102 real-time time series of medical images.

The method 100 may comprise a step S109 or performing a further downstream task. Optionally, the further downstream task comprises determining a stenosis, labelling a branch, determining a phase and/or determining a vessel segmentation.

The method 100 may comprise a step S112 of providing the determined coordinates of the tracked S110 at least one object.

Fig. 2 schematically illustrates an exemplary architecture of a downstream neural network (NN) system for tracking an object in a real-time time series of medical images. The downstream NN is generally referred to by the reference sign 200.

The downstream NN system 200 comprises an input layer 202 configured for receiving a real-time time series of medical images of a patient's anatomical region.

The downstream NN system 200 further comprises a spatio-temporal encoder 204 configured for encoding the received real-time time series of medical images. The spatio-temporal encoder 204 may comprise an output layer 206 configured for obtaining an encoded representation per frame of the received real-time time series. A frame corresponds to a medical image at a time instance within the real-time time series of medical images.

The downstream NN system 200 further comprises a MCA decoder 208 configured for decoding the obtained encoded representation of a most recent frame of the received real-time time series. The MCA decoder 208 correlates the most recent frame with a predefined number of preceding frames within the received real-time time series.

The downstream NN system 200 still further comprises a tracking head 210 configured for tracking at least one object comprised in the time series of medical images. The tracking comprises determining coordinates of the at least one object within an image plane based on the decoded most recent frame.

The downstream NN system 200 may comprise a pre-training module 201 configured for pretraining the spatio-temporal encoder using SSL. The SSL may comprise one or more of the tasks of determining a cardiac phase, determining a stenosis, and/or determining a vessel segmentation. Performing the one or more SSL tasks may comprise combining the spatio-temporal encoder with a task-specific weak-label decoder for each SSL task. The downstream NN system 200 may for example comprise one or more weak label decoder 201-A and/or a reconstruction decoder 201-B.

The downstream NN system 200 may comprise a trained detection model module 203-A configured for initializing the tracking of the at least one object by applying a trained detection model for object detection on an initial frame of the received real-time time series of medical images.

The downstream NN system 200 may comprise a symmetrically cropping module 203-B configured for symmetrically cropping any frame within the received real-time time series of medical images.

The downstream NN system 200 may comprise one or more further downstream task decoders 209 configured for performing one or more further downstream tasks. Optionally, the further downstream tasks comprise determining a stenosis, labelling a branch, determining a phase and/or determining a vessel segmentation. Any further downstream task decoder may be followed up (e.g., in the order of information flow) by a corresponding head (not shown).

The downstream NN system 200 may comprise an output layer 212 configured for providing the determined coordinates of the tracked at least one object.

The downstream NN system 200 may comprise a processor 214. The optional pretraining module 201, the optional trained detection model module 203-A, the optional symmetrically cropping module 203-B, the spatio-temporal encoder 204 (e.g., with its output layer 206), the MCA decoder 208, the optional further downstream task decoders 209, and/or the tracking head 210 (and/or any further head associated with a further downstream task) may be embodied by the processor 214.

The downstream NN system 200 may comprise a memory 216. In the memory 216, computer program elements may be stored for executing the method 100. Alternatively or in addition, (e.g., intermediary) results of the method steps may be stored in the memory 216.

The downstream NN system 200 may be configured for performing the method 100.

A training system for training a downstream NN (e.g. the downstream NN system 200), for tracking an object in a real-time time series of medical images may comprise the spatio-temporal encoder 204 of the downstream NN system 200 and at least one weak-label decoder and/or a reconstruction decoder.

The system may be configured to perform the method 100.

The inventive technique (e.g., comprising the method 100, and/or the downstream NN system 200) may alternatively be denoted as novel tracking framework for devices in X-ray leveraging supplementary cue-driven self-supervised features.

The inventive technique introduces a novel method to enhance the SSL model by integrating specialized models that provide the downstream NN system with additional supervision in terms of spatial and motion cues, enabling feature learning across multiple representation spaces. Furthermore, a novel tracking framework is introduced for tracking of at least one object (briefly also: device tracking), leveraging the full potential of the pre-trained spatio-temporal network to preserve natural motion, e.g., in angiography sequences. It also enables to be more generic and track multiple instances of devices. Such a pre-trained model (and/or downstream NN) with a strong comprehension of motion can be used to boost the performance of different tasks such as vesselness, phase detection, branch labeling and stenosis detection.

Shortcomings of both SSL and existing device tracking methods are improved on. The inventive SSL (in particular downstream) NN enhances its spatio-temporal learning by integrating spatial and motion cues obtained from additional specialized models (and/or SSL tasks), such as vesselness, stenosis, and ECG phase detection. These models (and/or the respective modules) provide weak-label supervision, encouraging the NN to learn features from multiple representation spaces. For example, vesselness is utilized to enhance a frame interpolation masked autoencoder.

Regarding device tracking, a novel framework that maximizes the potential of spatio-temporal features with symmetrical crops, preserving natural motion, is introduced by the inventive technique. This framework relies solely on motion-preserved feature space for spatial relation modeling between past and current (in particular, the most recent) frames. Additionally, it utilizes past frame features and predicted landmark coordinates to further guide the NN.

The inventive tracking framework is more generic and capable of tracking multiple instances of a device. This tracking framework achieves high precision and robustness, e.g., in detecting balloon markers and catheter tip. The inventive technique achieves a higher precision and robustness in tracking devices and/or objects, reducing failures compared to conventional techniques. Having interactive models (e.g., between the SSL and downstream regime) means that they can benefit from each other to solve specialized tasks, such as vessel segmentation, phase detection, branch labeling and stenosis detection.

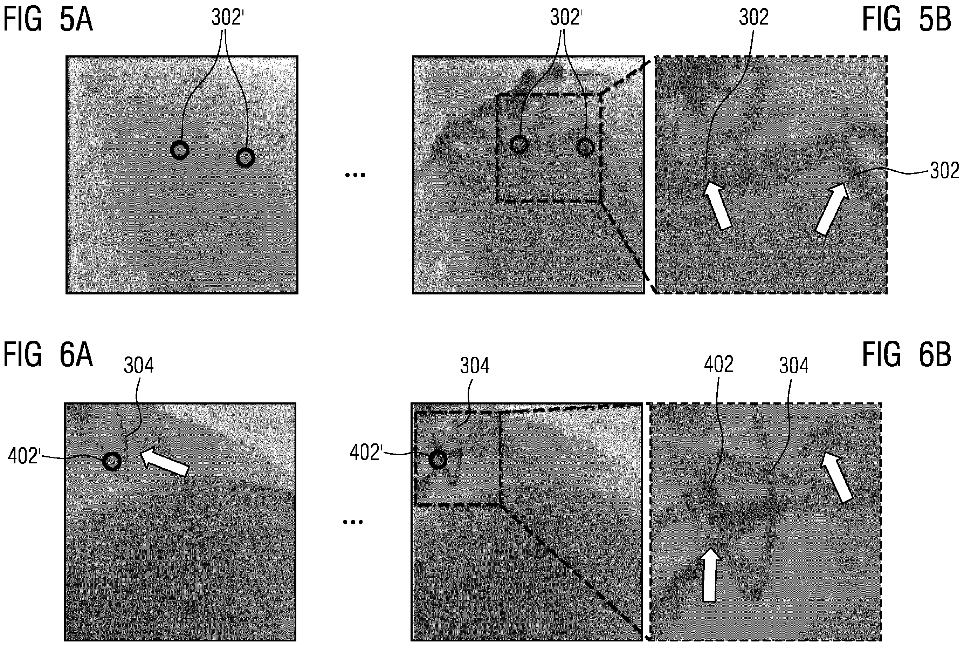

Figs. 5A, 5B, 6A and 6B show examples of device tracking in X-ray sequences, in particular with the challenges of tracking small object parts, such as balloon markers 302 and/or a catheter tip 402 across occlusions from contrasted vessels. The occlusions can come from other devices as well.

Tracked balloon markers 302 can help in registering frames for clear stent visualization.

A tracked catheter tip 402 of a catheter 304 can act as anchor for co-registering vessel structures, reducing the need for contrast.

E.g., balloon marker detection as shown for frames 1/86 and 67/86 in Figs. 5A and 5B, respectively, faces distractions from noise, which may, e.g., look similar to the markers. On the right hand side of Fig. 5B, barely visible balloon markers 302 are shown, and on the left hand side of Fig. 5B and in Fig. 5A, the locations of the balloon markers are indicated by circles.

Another challenge of device tracking is given by cardiac motion, respiratory motion and the device motion. In Figs. 6A and 6B, an example of a catheter 304 with catheter tip 402 and its tracked location 402' is shown.

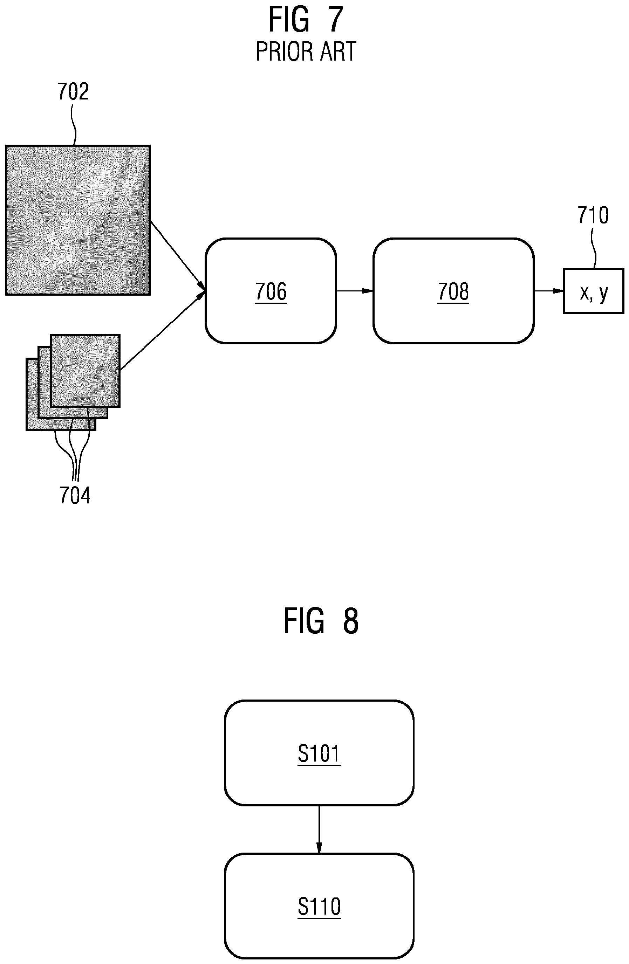

Fig. 7 shows an example of conventional device tracking. Conventional trackers are based on correlations of past frames 704 cropped around the object of interest (also: device) with the current frame 702. Feature extraction 706 is performed followed by feature fusion and/or feature correlation 708 to arrive at the coordinates 710 of the tracked device. The tracking, in particular the feature fusion and/or feature correlation 708 is conventionally based on spatial correlation only and does not take into account any motion, e.g., due to the patient's cardiac cycle, the patient's respiratory cycle and/or the motion of the device (e.g., a catheter tip) itself. Moreover, the conventional asymmetrical cropping introduces artificial motion. While the conventional tracking method may be good for understanding a change of appearance, it does not take into account the position of the object in the past.

Fig. 8 shows a first embodiment of the inventive technique for tracking an object. At step S101, a self-supervised (or SSL) self-supervised spatio-temporal encoder learns both space-time features. At step S110, the spatio-temporal encoder leverages space-time features to understand motion with - in particular in contrast to conventional tracking methods - additional feature matching and historical trajectory.

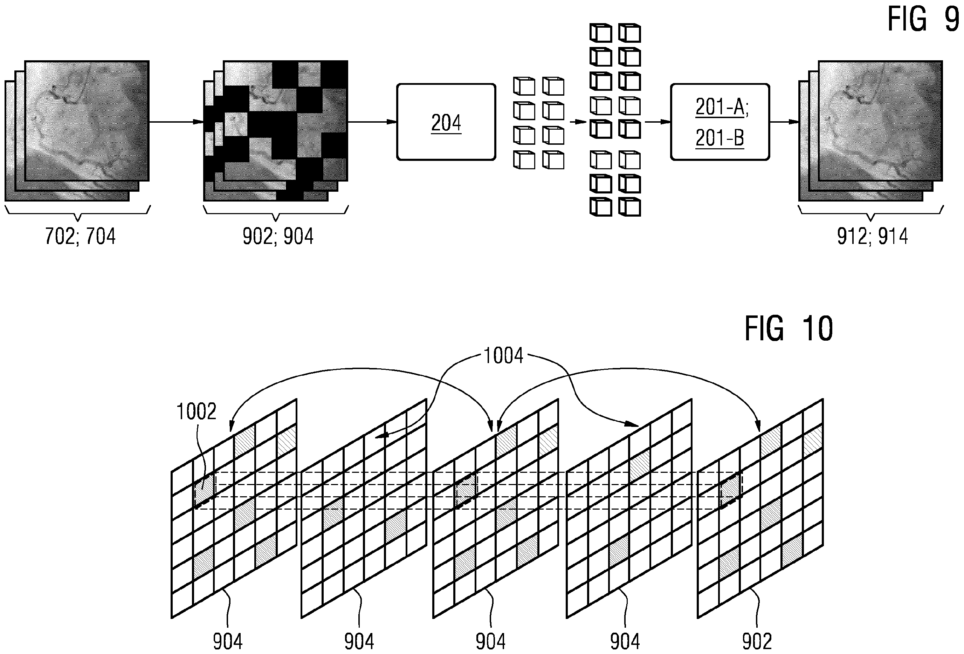

Fig. 9 shows a first example of SSL. The time series (also: sequence) of X-ray images (also: frames) 702; 704 is masked, resulting in masked (e.g., current and past) frames 902; 904, which are fed into a transformer encoder (in particular the spatio-temporal encoder 204). After going through a transformer decoder (e.g., the reconstruction decoder 201-B, and/or one or more weak label decoder 206-A), a time series of reconstructed (e.g., current and past) frames 912; 914 is obtained.

Fig. 10 schematically illustrates two types of masking, which can be employed simultaneously. At reference sign 1002, tube masking is exemplified. A pixel selected in a first frame 904 is retained in each of the subsequent frames 904; 902, with other pixels masked.

At reference sign 1004, frame masking is exemplified. In the example of Fig. 10, every second frame is masked. Said differently, only the first, third and fifth frame of Fig. 10 are used for the SSL and/or reconstruction task.

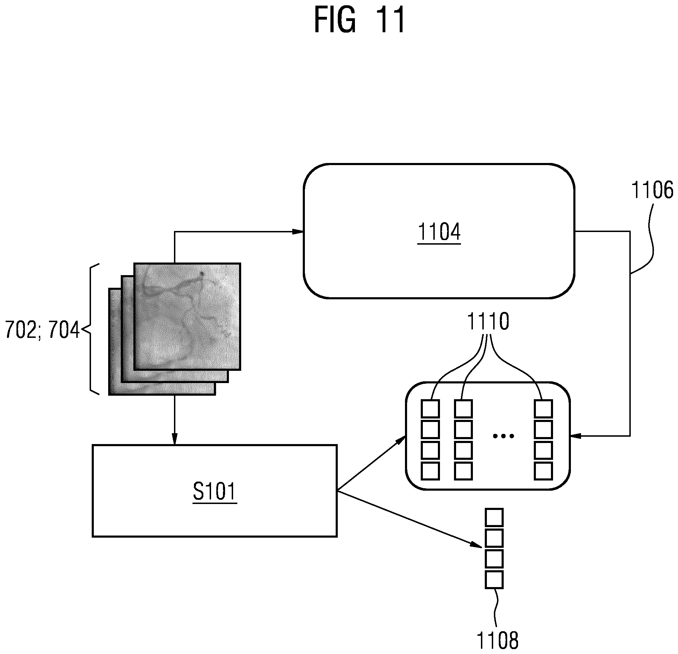

Fig. 11 shows an example architecture of additional representation space 1110, in addition to the conventional pixel space representation 1108, induced cues for enhancing the sequential SSL S101. At reference sign 1104, specialized models, such as vesselness, ECG phase detection and stenosis determination, are employed in a supervised 1106 manner to arrive at the additional representation spaces 1110.

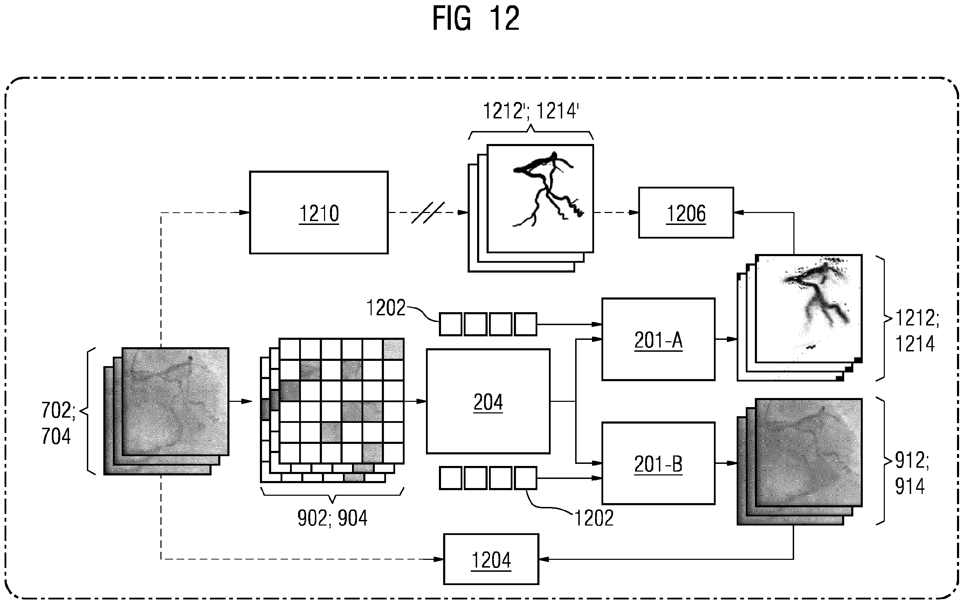

Fig. 12 shows an example of SSL with supplementary cues. A U-Net 1210 was trained to learn vessel segmentation and generates pseudo labels 1212'; 1214' for the unlabeled data 702; 704. The spatio-temporal encoder 204 is trained on unlabeled data to learn vesselness using the weak label decoder 201-A from pseudo labels during SSL as supplementary cues. Both the weak label decoder 201-A and the reconstruction decoder 201-B in the example of Fig. 12 receive masked tokens 1202 for the pre-training of the spatio-temporal encoder 204. At reference signs 1212; 1214 the result of assigning a weak label per current (and/or most recent) frame 702 and past (and/or preceding) frame 704, respectively, using the weak label decoder 201-A is illustrated. The SSL of vesselness uses an associated weak loss function 1206, and the reconstruction task uses a reconstruction loss function 1204.

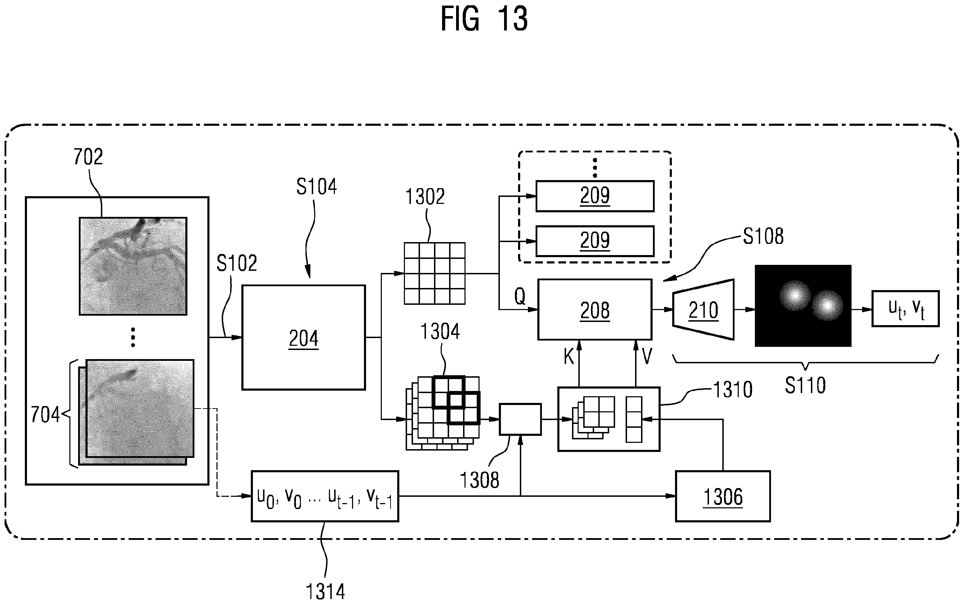

Fig. 13 shows an example of the inventive technique of tracking an object, which is alternatively also denoted as historical feature guided tracking. Symmetrical frames 702; 704 are used as into the pre-trained spatio-temporal encoder 204 to first obtain space-time features 1302; 1304 of the current (and/or most recent) and past (and/or preceding) frames, respectively. The background is crucial for understanding motion. Past frame features 1304 along with historical trajectory data (e.g., coordinates at past time steps 0,...,t-1) 1314 are correlated with the current frame features 1302 using the MCA decoder 208 to arrive at tracking S110 the object with current (and/or most recent) coordinates $(u_t, v_t)$ using the tracking head 210.

In Fig. 13, further tokenizing of the historic coordinates 1314 is schematically indicated at reference sign 1306 to arrive at correlation tokes 1310, which are input into the MCA decoder 208. Cropping in relation to past (and/or preceding) frames is schematically indicated at reference sign 1308.

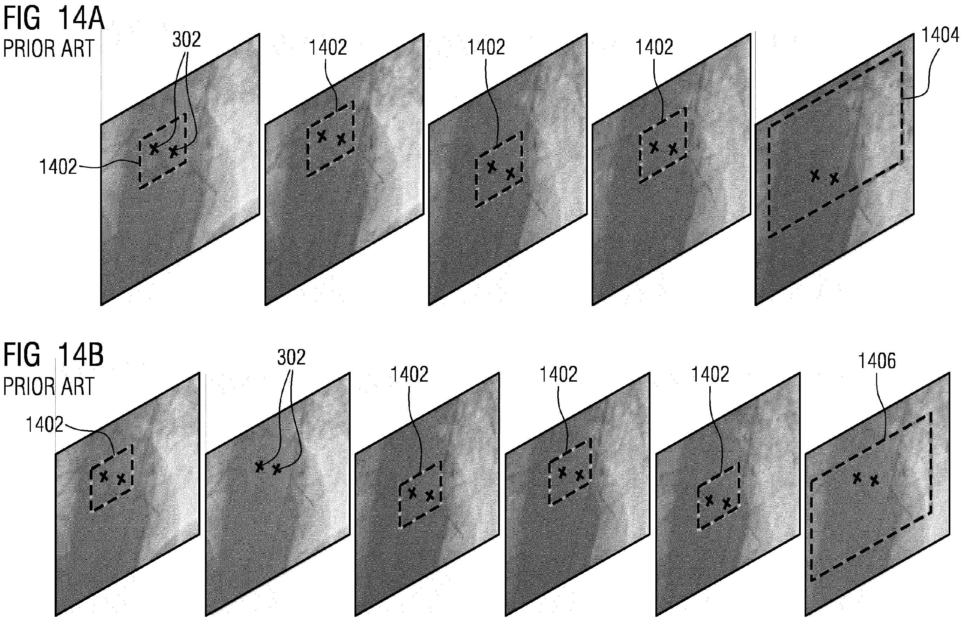

Figs. 14A and 14B schematically illustrate conventional asymmetric cropping. At reference sign 1402, input templates and/or crops from pixel-space (e.g., around a pair of balloon markers 302) are shown. Their positions vary from frame to frame. In Fig. 14A, the input frame (and/or search) 1404 in frame 4 is based on initialization. In Fig. 14B, frame 5 Is added, and the updated frame 1406 has a different position in the image plane. Said differently, cropping in frame 4 and frame 5 is vastly different (and/or asymmetrical).

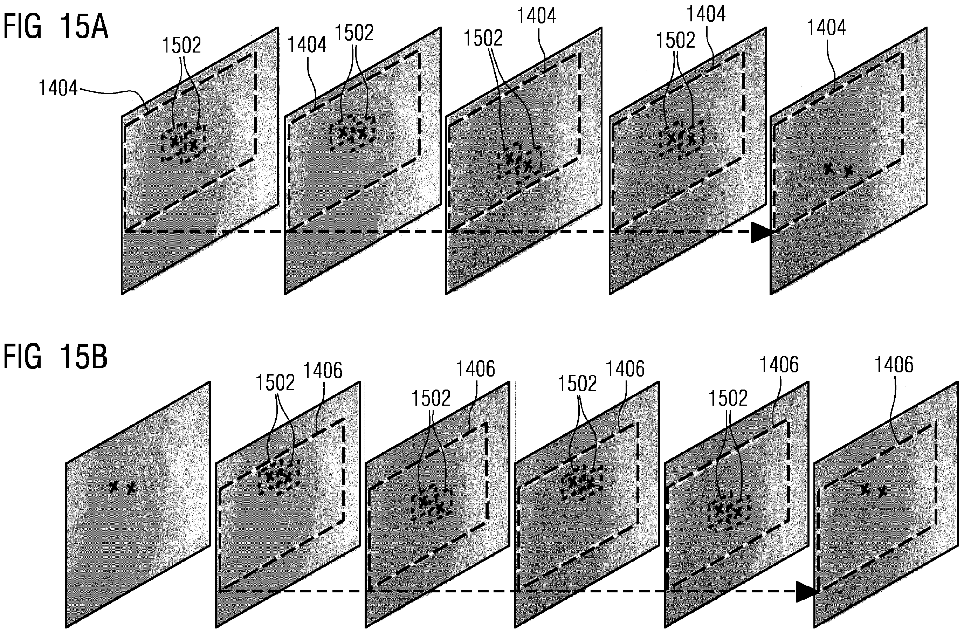

Figs. 15A and 15B show exemplary croppings used in the context of the inventive technique. Appearance tokens 1502 are placed around each instance (e.g., each balloon marker 302) separately. In Fig. 15A, from frame 0 to frame 4, the same input 1404 area (and/or cropping) is used for all frames. In Fig. 15B, frame 5 is added as update, and the same updated input 1406 area (and/or cropping) is used for a predefined number of preceding frames 1 to 4.

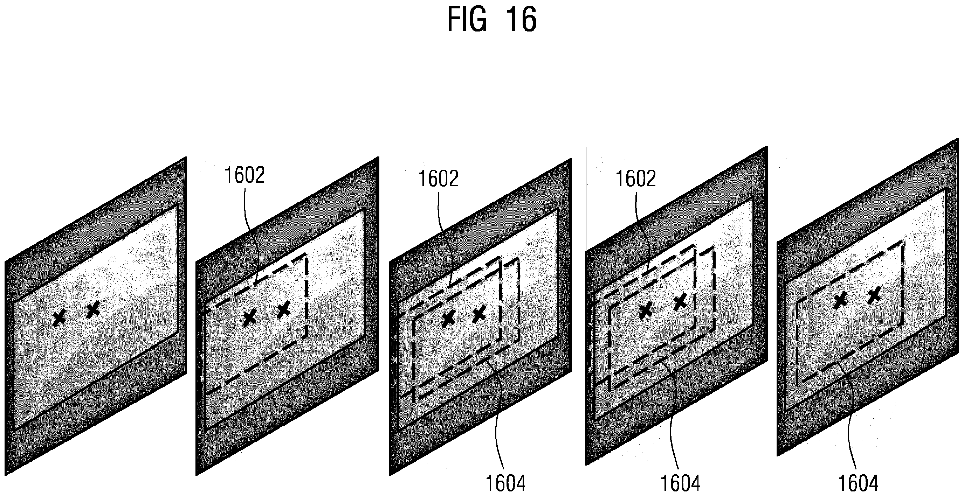

Fig. 16 shows a further example of the rolling window strategy for inference used within the context of the inventive technique. At reference sign 1602, a first window, based on initialization, is used. As time progresses, a window update 1604 is performed, based on prediction.

To reopen obstructed coronary arteries through angioplasty procedures, accurate placement of objects (also: devices) such as catheters, balloons, and stents under fluoroscopy or angiography is crucial. Identified balloon markers serve as anchor points for registering X-ray sequences (also: time series), enhancing stent visibility. The catheter tip facilitates precise navigation to the desired anatomy and often acts as an anchor point for co-registering vessel structures, minimizing the need for contrast in angiography. Accurate detection of devices in interventional X-ray sequences faces significant challenges, particularly due to obstructions from vessels and other devices, conventionally leading to mis-detection of such small objects. While most conventional tracking methods rely on spatial correlation of past and current appearance, they often lack strong motion comprehension essential for navigating through these challenging conditions. The conventional methods model appearance changes through asymmetric cropping techniques, resulting in the removal of natural underlying motion and inefficiencies in detecting multiple object instances.

To overcome the conventional limitations, an SSL approach that enhances general spatio-temporal understanding by incorporating additional motion cues and learning across multiple representation spaces on a large dataset is provided according to the inventive technique. A generic real-time tracking framework is introduced, which is in particular capable of localizing multiple instances of device landmarks (e.g., balloon markers and/or catheter tips) using the pretrained spatio-temporal network, leveraging past appearance and trajectory information.

The inventive technique demonstrates superior performance, significantly reducing failures compared to state-of-the-art methods for device tracking in interventional X-ray sequences. Specifically, the inventive technique achieves an (in particular at least) 82% reduction in max error for balloon marker detection and a (in particular at least) 30% reduction in max error for catheter tip detection.

The inventive technique combines SSL, attention models and device tracking. The conventional challenges are addressed and improvement is performed on the shortcomings of the SSL and the existing device tracking methods.

The inventive technique with a self-supervised network (e.g., the downstream NN 200) may, e.g., be trained on a large dataset of 16 million frames, enhancing its spatio-temporal learning with the motion cues obtained from vessel structures. Specialized models (and/or SSL tasks) can be used to enhance SSL via weak label supervision leading the NN to learn features based on multiple representation spaces.

The trained real-time tracking downstream NN can advantageously handle multiple components and/or multiple instances of objects, and/or various occlusions.

The inventive technique for tracking an object (e.g., a device) utilizes the full potential of spatio-temporal features with symmetrical crops preserving the natural motion and relies solely on the motion preserved feature-space for spatial relation modeling of past and current frame.

The spatio-temporal encoder used according to the inventive technique, is conventionally not used for tracking, except in FIMAE [1]. The spatio-temporal encoder trained and used according to the inventive technique is an improvement of the FIMAE spatio-temporal encoder [1]. The designed framework using the downstream NN 200 and/or Historical Feature Guided Tracker (HiFTrack), according to the inventive concept, in particular effectively uses the spatio-temporal encoder for tracking.

The inventive generic real-time tracking framework can track devices, and specifically small objects, with one or more instances (and/or components, such as balloon markers of a balloon) in varied scenarios with high precision and robustness.

Numerical experiments have been performed to prove the above improvements of the prior art.

The inventive technique uses multi-task SSL.

Let D, denote a large unlabeled dataset and $D_{vess}$ represent a dataset containing pixel-level annotations of vessels. A U-Net model, $F_{vess}(\theta)$, may be employed to train a "vesselness" model (as an example of an SSL task) using $D_{vess}$ and optimizing the parameter $\theta$. The trained model $F_{vess}(\hat{\theta})$ is then utilized to generate vesselness, offline for all sequences (and/or time series) $S_k \in Du$.

Vesselness is, according to an embodiment, integrated, into a FIMAE-based masked image modelling (MIM) model to pre-train on the unlabeled dataset $D_u$. Similar to the strategy employed in FIMAE, $n_u$ frames are sample from $S_k$,

$$\mathbb{I} \in \mathbb{R}^{n_u \times h \times w}$$

and spatially encoded to d dimensions resulting in $n_u \times \frac{h}{16} \times \frac{w}{16} \times d$ tokens. These frames are then subjected to a tube masking of 75% and a frame masking of 98%. Subsequently, the unmasked patches undergo a joint space-time attention through multi-head attention layers in a vision transformer (ViT) encoder (as an example of a spatio-temporal encoder 204). Specifically, each token for the $t^{th}$ frame is projected and flattened into query, key, and value embeddings: $(q_t, k_t, v_t)$, where $t = [0, 1, ... , n_u - 1]$. The joint space-time attention operates on concatenated vectors as follows:

$$\text{Attention(Q,K, V)} = \text{softmax}\left(\frac{QK^T}{\sqrt{d}}\right) V, \qquad (1)$$

where variables (Q, K, V) are defined as $Q = \text{Concat}(q_0, q_1, ... , q_{n_u-1})$, $K = \text{Concat}(k_0, k_1, ... , k_{n_u-1})$, $V = \text{Concat}(v_0, v_1, ... , v_{n_u-1})$, for $n_u$ sampled consecutive frames.

An exemplary use of the variables (Q, K, V) is schematically displayed in Fig. 13.

Fig. 12 schematically illustrates the self-supervised model augmented with vesselness for supplementary cues enabling learning spatio-temporal features at multiple representation spaces, as already described above.

The encoded features of dimension d are projected to a lower dimension $d_{lo}$ and concatenated with learnable masked tokens corresponding to the missing patches resulting in features $f_u \in \mathbb{R}^{n_u \times \frac{h}{16} \times \frac{w}{16} \times d_{lo}}$. Subsequently, according to the embodiment of Fig. 12, two decoders are employed: a reconstruction decoder 201-B, $H_{reco}$, for reconstructing the missing patches and a weak label decoder 201-A, $H_{weak}$, for vessel ness prediction. Both decoders 201-A; 201-B adopt a similar space-time attention mechanism as in Equation (1), followed by a multilayer perceptron (MLP) layer projection to 16 × 16 dimensions and reshaping the output to $n_u \times h \times w$:

$$\hat{\mathbb{I}} = \text{reshape}(\text{MLP}(H_{reco}(f_u)), \qquad (2)$$

$$\widehat{\mathbb{V}} = \text{reshape}(\text{MLP}(H_{weak}(f_u)) , \qquad (3)$$

where $\widehat{\mathbb{I}}$ is the predicted pixel-value reconstruction and $\widehat{\mathbb{V}}$ is the predicted vesselness. The final loss $(\mathcal{L}_u)$ is computed as $\mathcal{L}_u = \alpha(\mathcal{L}_{tube} + \gamma\mathcal{L}_{frame}) + \beta\mathcal{L}_{vess}$ with:

$$\mathcal{L}_{tube} = \frac{1}{|\Omega_{tube}|}\sum_{t=2\eta}^{n}\sum_{p_t\in\Omega_{tube}}\left\|\mathbb{I}_t(p_t) - \widehat{\mathbb{I}}_t(p_t)\right\|^2, \qquad (4)$$

$$\mathcal{L}_{frame} = \frac{1}{|\Omega_{frame}|}\sum_{t=2\eta+1}^{n}\sum_{q\in\Omega_{frame}}\left\|\mathbb{I}_t(q_t) - \widehat{\mathbb{I}}_t(q_t)\right\|^2, \qquad (5)$$

$$\mathcal{L}_{vess} = \frac{1}{|\omega|}\sum_{t=0}^{n}\sum_{r\in\omega}\left\|\mathcal{F}_{vess}(\hat{\theta})(\mathbb{I}_t(r_t)) - \widehat{\mathbb{V}}_t(r_t)\right\|^2, \qquad (6)$$

where $p_t \in \Omega_{tube}$ are the token indices of the tube masked tokens for frame $t$, and $\Omega_{tube}$ denotes the set of all tube masked token indices. Similarly, $p_t \in \Omega_{frame}$ refers to the frame masked token indices for frame $t$ in all randomly frame masked token indices. $\omega$ refers to all tokens, $\gamma$ is defined as the ratio of number of $\Omega_{tube}$ tokens and the number of $\Omega_{frame}$ tokens, and $\alpha$ and $\beta$ is optimized based on experiments to ensure a least amount of noise from the weak labels. The multi-task self-supervised model is depicted in Fig. 12.

An embodiment of the inventive downstream NN 200 is denoted as Historical Feature Guided Tracker (HiFTrack) for a downstream labeled dataset Di. For the (e.g., particular) objects in consideration, a goal is to track their location, $\hat{y}_t = (u_t, v_t)$ at any time $t$, $t \geq 0$ given a sequence (also: time series) of X-ray images $\{I_t\}_{t=0}^{N}$ with a known initial location $y_0 = (u_0, v_o)$.

Fig. 13 schematically illustrates the Historical Feature Guided Tracker. The pretrained spatio-temporal encoder 204 learns effective spatio-temporal features 1302 on a labeled dataset. Historical features 1304 and predicted coordinates 1314 help 1310 in relation modeling between past and current frames.

The spatio-temporal encoder 204 uses $n_l \in N$ input frames 702; 704 with symmetrical crops to the pre-trained spatio-temporal encoder 204 preserving the natural motion. Similar to the pre-training pipeline, each sampled sequence $n_l \times H \times W$ adopts a joint space-time attention to obtain features $f_l \in R^{n_l \times \frac{H}{16} \times \frac{W}{16} \times d}$. In order to further incorporate the relation modeling between past frames 704 and the current frame 702, a spatial correlation is built (e.g., only) in the motion aware feature space.

Advantageously, spatial correlation may be performed in the feature space, after the features are already aware of motion. In other words, spatial correlation according to the inventive technique may be performed in temporal aware feature space instead of spatial feature space.

For dynamic correlation with appearance and coordinate tokens, in particular to have a correlation with the past frames predictions and their features 1304, correlation tokens 1310 are built as a concatenation of appearance 1304 and coordinate 1306 tokens. In particular, the past frame predictions $(u_0, v_0),... (u_{n-1}, v_{n-1}))$ 1314 are used to crop the past frame features $f_{l0}, f_{l1}, ... f_{ln-1}$ 1304 leading to $\phi_t$ appearance tokens for each frame. To obtain coordinate tokens 1306, each of the past frame predicted coordinates 1314 is tokenized, obtaining $c_t$ similar to SwinTrack [12] to provide additional information about the trajectory. However, unlike SwinTrack, the trajectory is limited to the number of frames $(n_l)$ input to the encoder 204 to train on datasets that have limited frame annotations. Finally, the correlation tokens $(C)$ are obtained as follows.

$$C = \text{Concat}(\phi_0, c_0, \phi_1, c_1, \ldots \phi_{n-1}, c_{n-1}) . \qquad (7)$$

A MCA decoder 208 is adopted to correlate the current frame features $(f_{l_t})$ 1302 with the correlation tokens 1310. The output of the decoder 208 is passed through a small CNN head (as an example of the tracking head 210) to give a heatmap $(z_{heat})$ corresponding to the locations of the objects to be tracked on the current frame 6702:

$$z_{heat} = \text{Head}_P(\text{MCA}(f_{l_t} , C)) . \qquad (8)$$

The coordinates of the landmarks are obtained by grouping the heatmap by connected components analysis (CCA) and argmax operation:

$$(u_t, v_t) = \text{argmax}_{\text{Ind}}(\text{CCA}(z_{heat})) , \qquad (9)$$

where Ind refers to the number of landmarks (and/or, objects, and/or instances of objects, e.g., balloon markers) needed to be tracked. In the embodiment of Fig. 13, a mask decoder 209 may be used as an optional auxiliary task for datasets $D_l$, where additional annotations of dense masks are present. The mask decoder 209 may simply be another self-attention block following Eq. (1). Subsequently, the dense mask predictions ($z_{mask}$) are obtained by using another head (not shown in Fig. 13) on top of the mask decoder 209 outputs:

$$z_{mask} = \text{Head}_M(\text{Attention}(f_{l_t})) . \qquad (10)$$

A similar weighted loss, $\mathcal{L}_l = \mathcal{L}_P + \lambda \mathcal{L}_M$ as in FIMAE may be used as the loss function:

$$\mathcal{L}_P = \frac{2 * \sum G_{heat} * z_{heat}}{\sum G_{heat}^2 + \sum z_{heat}^2 + \epsilon} , \qquad (11)$$

$$\mathcal{L}_M = \begin{cases} \frac{2 * \sum G_{mask} * z_{mask}}{\sum G_{mask}^2 + \sum z_{mask}^2 + \epsilon} & if \ G_{mask} \ exists \\ 0 & otherwise \end{cases} , \qquad (12)$$

where G represents ground truth labels and $\lambda$ is the weight for weighting mask loss.

Specific datasets and experimental setups have been used to test the inventive technique.

A vesselness dataset ($D_{vess}$) is used as training and testing data, which consists of 3300 and 91 angiography sequences (also: time series), respectively. Five sufficiently contrasted frames were selected from each sequence for manual annotation. Coronary arteries were annotated as a set of centerline points and corresponding approximate vessel radius, which were then used to generate target vesselness maps for the training.

An unlabeled dataset ($D_u$) consists of 241,362 sequences comprising of both angiography and fluoroscopy sequences collected from 21,589 patients, comprising 16,342,992 frames in total.

Two downstream datasets ($D_l$) were used for our evaluating the performance of tracking. The balloon marker dataset consists of 1058 training and 113 test sequences consisting of both fluoroscopy and angiography sequences and all frames are annotated with the location of the balloon marker pairs. The balloon marker dataset as 38 obstruction cases and 75 cases with no obstruction. The Catheter tip dataset consists of 2,314 training sequences totaling 198,993 frames, out of which 44,957 have annotations and 219 test sequences with all frames annotated. A subset of this dataset also consists of catheter body mask annotations.

Landmark coordinates are, according to an embodiment, transformed into Gaussian heatmaps with a standard deviation of approximately 5mm, utilized for loss computation in heatmap regression. Frames are resampled and padded to $512 \times 512$ with 0.308 mm isotropic pixel spacing. During training, 5 frames are sampled and cropped to $256 \times 256$, and the model (also: the downstream NN) is trained for 300 epochs, employing a learning rate of 0.0002 with the AdamW optimizer and Cosine Annealing scheduler.

For comparison with State-of-the-Art, the performance according to the inventive technique is evaluated and compare with prior arts based on mean squared error (MSE) in Table 1 for detecting balloon markers and catheter tip. The inventive technique achieves best performance in terms of stability (std) and robustness (max) in both the datasets. The inventive technique shows 82% reduction in max error and 30% reduction in max error for catheter tip detection and balloon marker detection, respectively. In terms of precision, the inventive technique results in 66% error reduction for balloon markers. Note that balloon markers need two instances to be tracked, resulting in search-template based relation modelling, which is conventionally suboptimal leading to inferior performance for most trackers.

| Table 1: All Results | | | | | | | | | |
|---|---|---|---|---|---|---|---|---|---|
| Model | MSE- Balloon Marker | | | | MSE- Catheter Tip | | | | FPS |
| | mean | median | std | max | mean | median | std | max | |
| DenseUnet-MF | 1.37 | 0.32 | 2.98 | 21.33 | 9.75 | 7.38 | 7.01 | 53.56 | 87 |

(continued)

| Table 1: All Results | | | | | | | | | |
|---|---|---|---|---|---|---|---|---|---|
| SiameseRPN | 11.76 | 10.61 | 5.94 | 40.36 | 9.01 | 7.13 | 6.81 | 46.23 | 18 |
| Mixformer | 2.32 | 0.64 | 4.49 | 33.43 | 5.15 | 2.68 | 7.1 | 49.29 | 20 |
| Stark | 1.21 | 0.26 | 3.12 | 27.51 | 4.14 | 2.65 | 4.93 | 31.34 | 22 |
| Cycle YNet | 1.66 | 0.30 | 4.38 | 22.82 | 2.68 | 1.96 | 2.4 | 21.04 | 109 |
| ConTrack* | 1.02 | 0.26 | 2.52 | 21.95 | 1.63 | 1.08 | 1.7 | 13.32 | 21/12* |
| SimST-Fim | 1.03 | 0.29 | 2.06 | 15.95 | 1.44 | 1.02 | 1.35 | 10.23 | 42 |
| SimST-FimV | 0.91 | 0.30 | 1.89 | 15.05 | 1.35 | 0.95 | 1.15 | 9.35 | 42 |
| HiFTrack-Fim (inventive) | 0.45 | 0.28 | 0.61 | 4.82 | 1.47 | 1.24 | 0.89 | 4.71 | 28 |
| HiFTrack-FimV (inventi ve) | 0.31 | 0.24 | 0.28 | 2.68 | 1.33 | 1.14 | 0.78 | 4.70 | 28 |

In Table 1, ConTrack requires mask annotations for flow refinement, which is unavailable for the balloon marker dataset. Consequently, training without flow refinement and multi-task for balloon markers achieved 21 fps, compared to 12 fps for the catheter tip, as indicated by the asterisk (*).

In some cases, detection of the one or more objects (in particular, the balloon markers and/or cathether tips) was manually initiated. In other cases, automatic initialization was used. A detection model was trained on a single full-sized frame (e.g., of non-contrasted frames) with the same backbone as the tracker (and/or the downstream NN), serving as the initialization.

Performance for scenarios with obstruction generally differs from scenarios without obstruction.

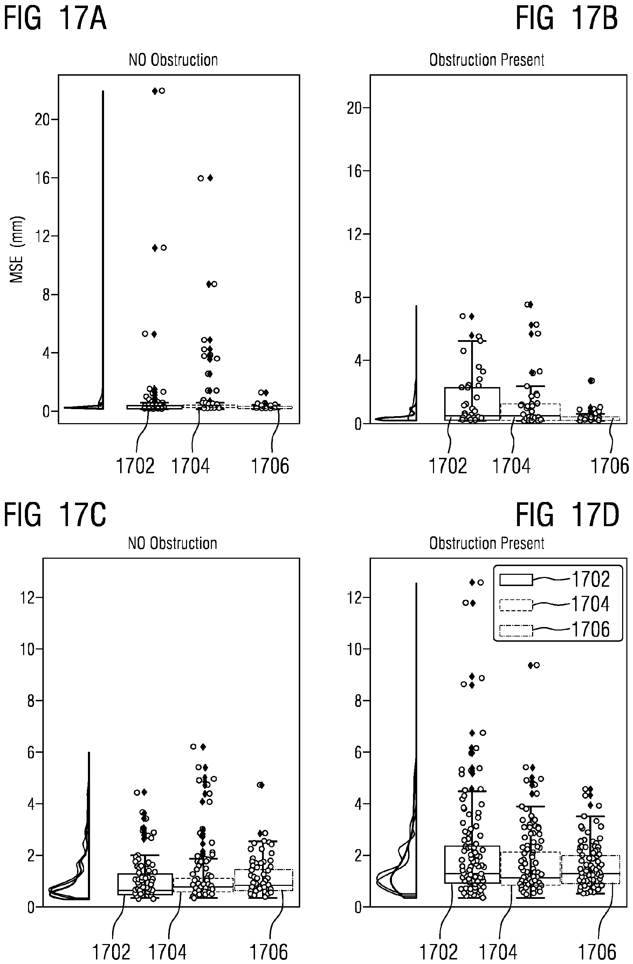

Obstructions caused by vessel structures tend to significantly occlude the balloon markers due to their extremely small size compared to the diameter of the vessels amid additional obstructions caused by other devices (and/or objects). Similarly, such obstruction can result in a catheter and vessels being indistinguishable, making the catheter tip occluded. The performance using the inventive technique is compared with SimST 1704 and ConTrack 1702 for the both the datasets in Figs. 17A, 17B, 17C and 17D for two cases.

Figs. 17A and 17B show error (MSE) distributions for scenarios without and with obstruction, respectively, for balloon markers.

Figs. 17C and 17D show error (MSE) distributions for scenarios without and with obstruction, respectively, for catheter tip tracking.

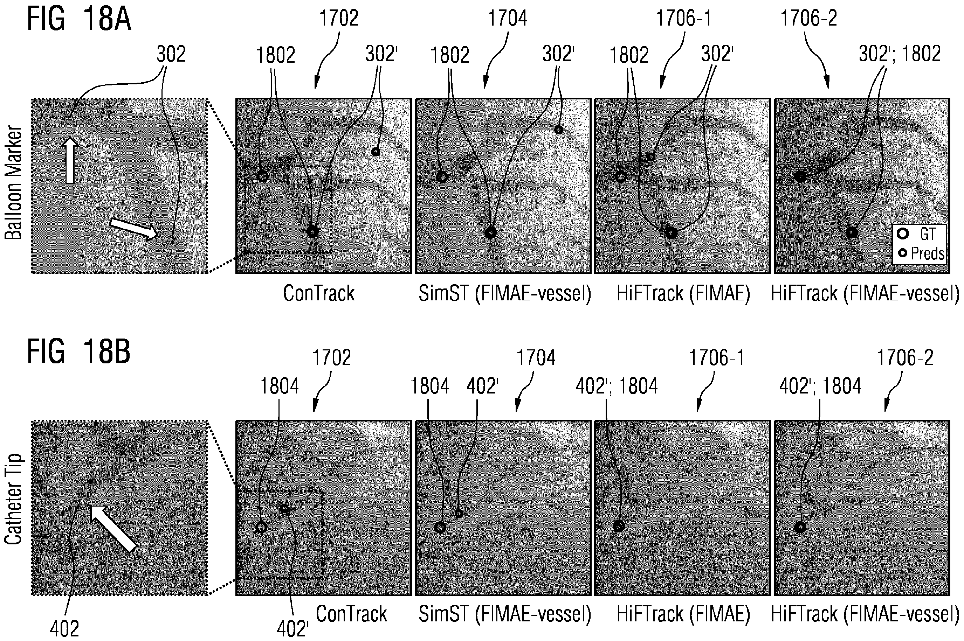

In Figs. 17A and 17C, the considered object is not occluded at all for all the frames in the sequences. In Figs. 17B and 17D, an obstruction is caused in at least one of the frame in the entire sequence. While the error distribution is mostly similar for the different methods 1702; 1704; 1706 in no obstruction scenarios the inventive technique 1706 significantly reduces failures in obstruction cases. An example of the inventive technique's robust tracking performance in obstruction caused by vessel structures during contrast injection for balloon markers is shown in Fig. 18A.

Figs. 18A and 18B show qualitative examples of balloon marker tracking and catheter tip tracking, respectively, when obstructed via vessel structures. The schematic illustration at reference sign 1702 shows the result of the conventional ConTrack, the schematic illustration at reference sign 1704 shows the result of the conventional SimST, and the schematic illustrations at reference signs 1706-1 and 1706-2 show two embodiments, in which the inventive technique was used (denoted as HiFTrack (FIMAE) and HiFTrack (FIMAE-vessel), respectively).

The inventive technique consistently outperforms the conventional methods in terms of the tracked location 302' of the balloon markers being identical, or at least very close, to the ground truth 1802 in Fig. 18A, and similarly for the tracked location 402' of the catheter tip 402' and the corresponding ground truth 1804.

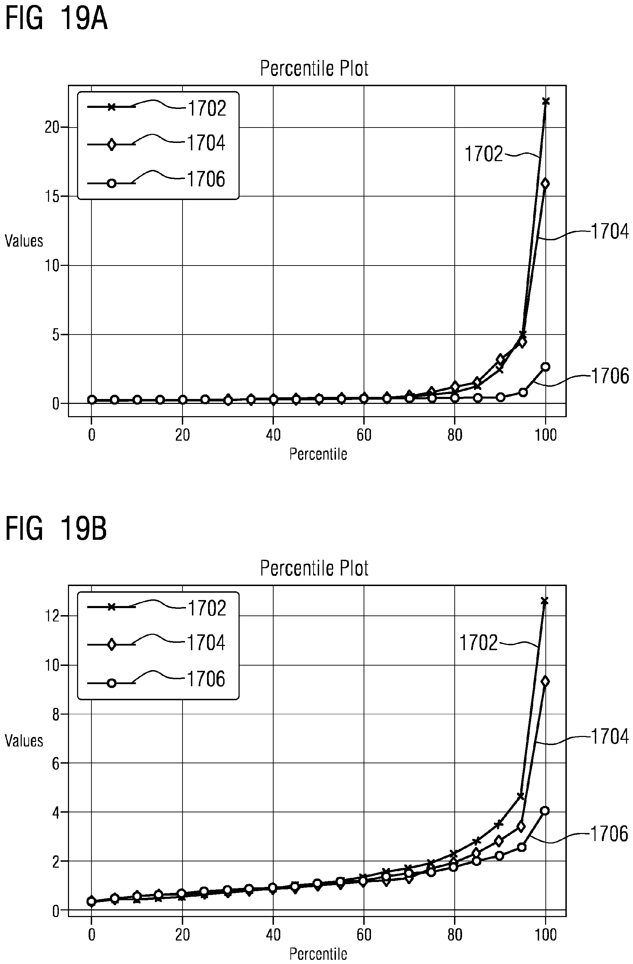

Further error distributions, using percentile plots of errors, for balloon markers and catheter tips are shown in Figs. 19A and 19B, respectively. The inventive technique (e.g., denoted as HiFTrack), as illustrated at reference sign 1706, consistently outperforms the conventional ConTrack 1702 and the conventional SimST 1704.

A reliance on (in particular manual) initialization may be reduced. While tracking problems are conventionally formulated as detection using a manual initialization, a fully automated system dictates the need for good performance with no manual initialization. To evaluate the tracking performance without (in particular manual) initialization, a detection model may be with a single full-sized frame with the same backbone as the tracker (and/or the downstream NN). The first frame predictions from the detection model then serve as the initialization, assuming the first frame is always unobstructed.

The performance of the trackers without initialization is shown in Table 2. The results show that having a model predicted initialization reduces the tracking performance for the trackers. However, the inventive technique achieves comparable robustness to existing state-of-the-art trackers, even without initialization. Furthermore, the initialization independent variant of the inventive technique outperforms the precision of the initialization dependent previous approaches for balloon marker detection.

| Table 2: No Initialization | | | | | | | | |
|---|---|---|---|---|---|---|---|---|
| Model | Balloon Markers | | | | Catheter Tip | | | |
| | mean | median | std | max | mean | median | std | max |
| DenseUnet-MF | 1.37 | 0.32 | 2.98 | 21.33 | 9.75 | 7.38 | 7.01 | 53.56 |
| ConTrack | 1.19 | 0.25 | 2.70 | 20.36 | 2.87 | 2.29 | 2.36 | 17.26 |
| SimST-FimV | 0.95 | 0.30 | 2.42 | 22.74 | 2.24 | 1.61 | 2.19 | 18.66 |
| HiFTrack-FimV | 0.57 | 0.24 | 1.73 | 16.61 | 1.79 | 1.15 | 1.76 | 12.96 |

Ablations and/or the effect of attending to the correlation tokens, e.g., change of appearance and the trajectory is explored in Table 3. While having simply the spatio-temporal encoder itself is already promising, the best results using the inventive technique are obtained when correlation tokens are attended at the MCA decoder. Only having either of appearance and trajectory may be sub-optimal.

| Table 3: Correlation tokens | | | | |
|---|---|---|---|---|
| appearance | coordinates | mean | std | max |
| ✗ | ✗ | 2.13 | 2.01 | 19.49 |
| ✗ | ✓ | 1.73 | 1.29 | 12.04 |
| ✓ | ✗ | 1.40 | 0.88 | 6.41 |
| ✓ | ✓ | 1.33 | 0.78 | 4.70 |

The inventive technique enhances SSL by incorporating contextual cues through weak-label supervision, encouraging the downstream NN to learn features across multiple representation spaces. Additionally, a novel tracking framework is introduced leveraging a pretrained spatio-temporal encoder (also: spatio-temporal network) for robust device tracking, substantially reducing failures compared to previous state-of-the-art methods. The positive results of SSL is encouraging to explore more than 2 representation spaces and use the pretrained downstream NN for tasks other than tracking. The inventive technique bridges the gap between manual initialization and no initialization.

It is noted that the training on sparsely annotated data presents potential challenges in designing a system robust to no-initialization scenarios and may require further investigation. It is further noted that, while performance is evaluated on a large dataset, assessing the robustness of the inventive technique as the evaluation dataset scales requires further study.

In the training, in an embodiment 5 annotated frames are sampled from the training sequences randomly and sorted based on time. In case, annotations exist for less than 5 frames, either the first or last frame is repeated to match the total number of frames. The model (and/or a tracking space) is the cropped to 256x256 using the first frame coordinates as the centre and trained to produce heatmaps on the last frame. Augmentations, such as horizontal flip, vertical flip and random rotation, are used.

In the inference, in conventional tracking strategies, the first frame is always used to ensure least amount of noise from previous predictions and rely more on the initialization. In order to reduce the reliance on initialization and have motion continuity, the inventive technique uses (e.g., always) consecutive frames with same crop parameters for the encoder. In particular, 5 frames maybe cropped with the initialization as the centre. Once the last frame predictions are obtained, they are used it crop the next frame, and also the previous 3 frames, obtaining 5 frames with same crop parameters. This rolling window strategy is shown exemplarily in Fig. 16.

Independent of the grammatical term usage, individuals (e.g., users, medical practitioners and/or patients) with male, female or other gender identifies are included within the term.

Wherever not already described explicitly, individual embodiments, or their individual aspects and features, described in relation to the drawings can be combined or exchanged with one another without limiting or widening the scope of the described invention, whenever such a combination or exchange is meaningful and in the sense of this invention. Advantages which are described with respect to a particular embodiment of present invention or with respect to a particular figure are, wherever applicable, also advantages of other embodiments of the present invention.

Cited Prior Art

1 Islam, S., Murthy, V.N., Neumann, D., Das, B.K., Sharma, P., Maier, A., Comaniciu, D., Ghesu, F.C.: Self-supervised learning for interventional image analytics: toward robust device trackers. Journal of Medical Imaging 11(3), 035001 (2024). https://doi.org/10.1117/1.JMI.11.3.035001

2 Bromley, J., Guyon, I., LeCun, Y., S.ckinger, E., Shah, R.: Signature verification using a" siamese" time delay neural network. Advances in neural information processing systems 6 (1993)

3 Cui, Y., Jiang, C., Wang, L., Wu, G.: Mixformer: end-to-end tracking with iterative mixed attention. In: Proceedings of the IEEE/CVF Conference on Computer Vision and Pattern Recognition. pp. 13608-13618 (2022)

4 Demoustier, M., Zhang, Y., Murthy, V.N., Ghesu, F.C., Comaniciu, D.: Contrack: contextual transformer for device tracking in x-ray. arXiv preprint arXiv:2307.07541 (2023)

5 Fan, H., Ling, H.: Cract: Cascaded regression-align-classification for robust tracking. In: 2021 IEEE/RSJ International Conference on Intelligent Robots and Systems (IROS). pp. 7013-7020. IEEE (2021)

6 Feichtenhofer, C., Fan, H., Xiong, B., Girshick, R., He, K.: A large-scale study on unsupervised spatiotemporal representation learning. In: Proceedings of the IEEE/CVF Conference on Computer Vision and Pattern Recognition, pp. 3299-3309 (2021)

7 Feichtenhofer, C., Li, Y., He, K., et al.: Masked autoencoders as spatiotemporal learners. Advances in neural information processing systems 35, 35946-35958 (2022)

8 Figini, F., Louvard, Y., Sheiban, I.: Use of stent enhancement technique during percutaneous coronary intervention- a case series. Heart International 13(1), 28 (2019)

9 Huang, L., Liu, Y., Chen, L., Chen, E.Z., Chen, X., Sun, S.: Robust landmarkbased stent tracking in x-ray fluoroscopy. In: European Conference on Computer Vision. pp. 201-216. Springer (2022)

10 Li, B., Yan, J., Wu, W., Zhu, Z., Hu, X.: High performance visual tracking with siamese region proposal network. In: Proceedings of the IEEE conference on computer vision and pattern recognition, pp. 8971-8980 (2018)

11 Lin, J., Zhang, Y., Amadou, A.a., Voigt, I., Mansi, T., Liao, R.: Cycle ynet: semisupervised tracking of 3d anatomical landmarks. In: Machine Learning in Medical Imaging: 11th International Workshop, MLMI 2020, Held in Conjunction with MICCAI 2020, Lima, Peru, October 4, 2020, Proceedings 11. pp. 593-602. Springer (2020)

12 Lin, L., Fan, H., Zhang, Z., Xu, Y., Ling, H.: Swintrack: a simple and strong baseline for transformer tracking. Advances in Neural Information Processing Systems 35, 16743-16754 (2022)

13 Ma, H., Smal, I., Daemen, J., van Walsum, T.: Dynamic coronary roadmapping via catheter tip tracking in x-ray fluoroscopy with deep learning based Bayesian filtering. Medical image analysis 61, 101634 (2020)

14 Park, N., Kim, W., Heo, B., Kim, T., Yun, S.: What do self-supervised vision transformers learn? arXiv preprint arXiv:2305.00729 (2023)

15 Qian, R., Meng, T., Gong, B., Yang, M.H., Wang, H., Belongie, S., Cui, Y.: Spatiotemporal contrastive video representation learning. In: Proceedings of the IEEE/CVF Conference on Computer Vision and Pattern Recognition. pp. 6964-6974 (2021)

16 Recasens, A., Luc, P., Alayrac, J.B., Wang, L., Strub, F., Tallec, C., Malinowski, M., Pătrăucean, V., Altch., F., Valko, M., et al.: Broaden your views for selfsupervised video learning. In: Proceedings of the IEEE/CVF International Conference on Computer Vision. pp. 1255-1265 (2021)

17 Tong, Z., Song, Y., Wang, J., Wang, L.: Videomae: masked autoencoders are dataefficient learners for self-supervised video pre-training. Advances in neural information processing systems 35, 10078-10093 (2022)

18 Wei, X., Bai, Y., Zheng, Y., Shi, D., Gong, Y.: Autoregressive visual tracking. In: Proceedings of the IEEE/CVF Conference on Computer Vision and Pattern Recognition. pp. 9697-9706 (2023)

19 Yan, B., Peng, H., Fu, J., Wang, D., Lu, H.: Learning spatio-temporal transformer for visual tracking. In: Proceedings of the IEEE/CVF international conference on computer vision. pp. 10448-10457 (2021)

20 Yu, Y., Xiong, Y., Huang, W., Scott, M.R.: Deformable siamese attention networks for visual object tracking. In: Proceedings of the IEEE/CVF conference on computer vision and pattern recognition. pp. 6728-6737 (2020)

21 Zhang, Z., Liu, Y., Wang, X., Li, B., Hu, W.: Learn to match: automatic matching network design for visual tracking. In: Proceedings of the IEEE/CVF International Conference on Computer Vision. pp. 13339-13348 (2021)

List of References

| | |
|---|---|
| 100 | Method |
| S101 | Step of pretraining a spatio-temporal encoder |
| S102 | Step of receiving a time series of medical images |
| S103-A | Step of initializing the tracking by applying a trained detection model |
| S103-B | Step of symmetrically cropping frames |
| S104 | Step of encoding the time series of medical images |
| S106 | Step of obtaining an encoded representation per frame of the time series |
| S108 | Step of decoding an encoded representation of the most recent frame |
| S109 | Step of performing a further downstream task |
| S110 | Step of tracking an object comprised in the time series of medical images |
| S112 | Step of providing coordinates of the tracked object for display |
| 200 | Downstream neural network (NN) system |
| 201 | Pretraining module |
| 201-A | Weak label decoder |
| 201-B | Reconstruction decoder |
| 202 | Input layer |
| 203-A | Trained detection model module |
| 203-B | Symmetrically cropping module |
| 204 | Spatio-temporal encoder |
| 206 | Output layer of the spatio-temporal encoder |
| 208 | Multi-head cross-attention (MCA) decoder |
| 209 | Further downstream task decoder |
| 210 | Tracking head |
| 212 | Output layer |
| 214 | Processor |
| 216 | Memory |
| 302 | Balloon marker |
| 302' | Tracked location of balloon marker |
| 304 | Catheter |
| 402 | Catheter tip |
| 402' | Tracked location of catheter tip |
| 702 | Current (and/or most recent) frame |
| 704 | Past frames |
| 706 | Feature extraction |
| 708 | Feature fusion and/or feature correlation |
| 710 | Coordinates of tracked object (e.g., tracked device) |
| 902 | Masked current (and/or most recent) frame |

| 904 | Masked past (and/or preceding) frame |
|---|---|
| 912 | Reconstructed current (and/or most recent) frame |
| 914 | Reconstructed past (and/or preceding) frame |
| 1002 | Tube masking |
| 1004 | Frame masking |
| 1104 | Specialized model (e.g., SSL task and/or further downstream task) |
| 1106 | Supervision |
| 1108 | Pixel representation space |
| 1110 | Additional representation spaces |
| 1202 | Masked tokens |
| 1204 | Reconstruction loss function |
| 1206 | Weak loss function |
| 1210 | U-Net |
| 1212 | Weak label as result of the weak label decoder for current (and/or most recent) frame |
| 1212' | Weak label from trained U-Net (as pseudo-Ground Truth) for current (and/or most recent) frame |
| 1214 | Weak label as result of the weak label decoder for past (and/or preceding) frame |
| 1214' | Weak label from trained U-Net (as pseudo-Ground Truth) for past (and/or preceding) frame |
| 1302 | Space-time features of current (and/or most recent) frame |
| 1304 | Space-time features of past (and/or preceding) frame |
| 1306 | Tokenization of coordinates |
| 1308 | Cropping |
| 1310 | Correlation tokens |
| 1314 | Past prediction of coordinates |
| 1402 | Input template and/or input crop from pixel-space |
| 1404 | Input frame based on initialization |
| 1406 | Updated frame |
| 1602 | First window, based on initialization |
| 1604 | Window update, based on prediction |
| 1702 | Results for conventional ConTrack |
| 1704 | Results for conventional SimST |
| 1706; 1706-N | Results for the inventive HiFTracker (and/or downstream NN) |
| 1802 | Ground Truth for balloon marker tracking |
| 1804 | Ground Truth for catheter tip tracking |

**Claims**

1. Computer-implemented method (100) for tracking an object in a real-time time series of medical images, by a downstream neural network, NN, comprising the method steps of:

   - Receiving (S102) a real-time time series of medical images of a patient's anatomical region at an input layer of the downstream NN;
   - Encoding (S104), using a spatio-temporal encoder of the downstream NN, the received (S102) real-time time series of medical images and obtaining (S106) an encoded representation per frame of the received (S102) real-time time series, wherein a frame corresponds to a medical image at a time instance within the real-time time series of medical images;
   - Decoding (S108), using a multi-head cross-attention decoder of the downstream NN, the obtained (S106) encoded representation of a most recent frame of the received (S102) real-time time series, wherein the multi-head cross-attention decoder correlates the most recent frame with a predefined number of preceding frames within the received (S102) real-time time series; and
   - Tracking (S110) at least one object comprised in the real-time time series of medical images, wherein the tracking (S110) comprises determining coordinates of the at least one object within an image plane based on the decoded (S108) most recent frame.

2. Method (100) according to claim 1, wherein the medical images are X-ray images and/or wherein the medical images are chest images.

3. Method (100) according to any of the preceding claims, further comprising the method step of:

- Providing (S112) the determined coordinates of the tracked (S110) at least one object.

4. Method (100) according to any of the preceding claims, further comprising the method step of:

- Pretraining (S101) the spatio-temporal encoder using self-supervised learning, SSL, wherein the SSL comprises at least one of the tasks selected from the following group, consisting of:

• determining a cardiac phase;
• determining a stenosis; and
• determining a vessel segmentation; and

wherein performing the at least one SSL task comprises combining the spatio-temporal encoder with a task-specific weak-label decoder for the at least one SSL task.

5. Method (100) according to any of the preceding claims, wherein the spatio-temporal encoder is pretrained by performing a reconstruction task, wherein performing the reconstruction task comprises combining the spatio-temporal encoder with a reconstruction decoder.

6. Method (100) according to claim 4 or 5, wherein an input to the spatio-temporal encoder is subject to masking, in particular to tube masking and/or frame masking.

7. Method (100) according to any one of the preceding claims, further comprising the step:

- initializing (S103-A) the tracking of the at least one object by applying a trained detection model for object detection on an initial frame of the received (S102) real-time time series of medical images.

8. Method (100) according to any one of the preceding claims, wherein the at least one object comprises:

- two or more objects, which are tracked separately; and/or
- two or more components and/or parts of an extended object, which are tracked separately, optionally wherein the at least one object comprises two ends of an extended object, wherein each end is tracked separately.

9. Method (100) according to any of the preceding claims, wherein the predefined number of preceding frames comprises between one and ten frames, preferably between three and eight frames, and more preferably between four and six frames.

10. Method (100) according to any of the preceding claims, wherein the at least one object comprises a surgical instrument, in particular a catheter tip and/or at least one balloon marker.

11. Method (100) according to any of the preceding claims, further comprising the step of:

- symmetrically cropping (S103-B) any frame within the received (S102) real-time time series of medical images.

12. Method (100) according to any of the preceding claims, wherein, using the multi-head cross-attention decoder, in the decoding step (S108) a background is removed for spatial correlation, and a historical trajectory of the at least one object and/or the decoding (S108) based on the predefined number of preceding frames is applied solely on motion-preserved features.

13. Method (100) according to any of the preceding claims, further comprising the method step of:

- performing (S109) a further downstream task;

optionally wherein the further downstream task comprises determining a stenosis, labelling a branch, determining a phase and/or determining a vessel segmentation.

14. A downstream neural network, NN, system (200) for tracking an object in a real-time time series of medical images, the downstream NN system, comprising:

- an input layer (202) configured for receiving a real-time time series of medical images of a patient's anatomical region;
- a spatio-temporal encoder (204) configured for encoding the received real-time time series of medical images and obtaining an encoded representation per frame of the received real-time time series, wherein a frame corresponds to a medical image at a time instance within the real-time time series of medical images;
- a multi-head cross-attention decoder (208) configured for decoding the obtained encoded representation of a most recent frame of the received real-time time series, wherein the multi-head cross-attention decoder (208) correlates the most recent frame with a predefined number of preceding frames within the received real-time time series; and
- A tracking head (210) configured for tracking at least one object comprised in the time series of medical images, wherein the tracking comprises determining coordinates of the at least one object within an image plane based on the decoded most recent frame.

15. Downstream NN system (200) according to the directly preceding claim, further configured to perform any one of the steps, or comprise any one of the features disclosed in the context, of the method (100) according to the method claims 2 to 13.

16. A training system for training a downstream neural network, NN, system (200) for tracking an object in a real-time time series of medical images, the training system comprising:

- a spatio-temporal encoder (204) of the downstream NN system (200) of claim 14 or 15; and
- at least one weak-label decoder and/or a reconstruction decoder.

FIG 2

200

201

212

202

201-A  201-B

203-A

203-B

204

206

208

209

210

216

214

FIG 1

100

S101

S102

S103-A

S103-B

S104

S106

S108

S109

S110

S112

FIG 5A

FIG 5B

302'

302

302

FIG 6A

FIG 6B

304

304

402

304

402'

402'

EP 4 614 458 A1

# FIG 7
## PRIOR ART

702

710

706 → 708 → x, y

704

# FIG 8

S101

S110

FIG 9

702; 704    902; 904    204    201-A;
201-B    912; 914

FIG 10

1004

1002

904    904    904    904    902

EP 4 614 458 A1

# FIG 11

702; 704

1104

1106

1110

S101

1108

# FIG 12

EP 4 614 458 A1

FIG 13

FIG 14A
PRIOR ART

FIG 14B
PRIOR ART

FIG 15A

FIG 15B

EP 4 614 458 A1

FIG 16

EP 4 614 458 A1

## FIG 17A

NO Obstruction

## FIG 17B

Obstruction Present

## FIG 17C

NO Obstruction

## FIG 17D

Obstruction Present

FIG 18A

FIG 18B

## FIG 19A

Percentile Plot

## FIG 19B

Percentile Plot

## EUROPEAN SEARCH REPORT

Europäisches
Patentamt
European
Patent Office
Office européen
des brevets

**Application Number**

EP 24 18 8308

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DEMOUSTIER MARC ET AL: "ConTrack: Contextual Transformer for Device Tracking in X-Ray", 1 October 2023 (2023-10-01), MEDICAL IMAGE COMPUTING AND COMPUTER ASSISTED INTERVENTION - MICCAI 2023; [LECTURE NOTES IN COMPUTER SCIENCE; LECT.NOTES COMPUTER], SPRINGER NATURE SWITZERLAND, CHAM, PAGE(S) 679 - 688, XP047671755, ISSN: 0302-9743 ISBN: 978-3-031-43995-7 [retrieved on 2023-10-01] * Abstract * * figures 1,2 * * page 4 - page 8 * | 1-16 | INV. G06V10/82 G06T7/246 |
| A | DANG VIEN NGOC ET AL: "Vessel-CAPTCHA: An efficient learning framework for vessel annotation and segmentation", MEDICAL IMAGE ANALYSIS, OXFORD UNIVERSITY PRESS, OXOFRD, GB, vol. 75, 13 October 2021 (2021-10-13), XP086895332, ISSN: 1361-8415, DOI: 10.1016/J.MEDIA.2021.102263 [retrieved on 2021-10-13] * the whole document * | 1-16 | |
| | | | TECHNICAL FIELDS SEARCHED (IPC) G06V G06T |

The present search report has been drawn up for all claims

| Place of search | Date of completion of the search | Examiner |
|---|---|---|
| The Hague | 20 December 2024 | Ionescu, Tudor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ISLAM, S.** ; **MURTHY, V.N.** ; **NEUMANN, D.** ; **DAS, B.K.** ; **SHARMA, P.** ; **MAIER, A.** ; **COMANICIU, D.** ; **GHESU, F.C.** Self-supervised learning for interventional image analytics: toward robust device trackers.. *Journal of Medical Imaging*, 2024, vol. 11 (3), 035001
- **BROMLEY, J.** ; **GUYON, I.** ; **LECUN, Y.** ; **S.CKINGER, E.** ; **SHAH, R.** Signature verification using a'' siamese'' time delay neural network.. *Advances in neural information processing systems*, 1993, vol. 6
- **CUI, Y.** ; **JIANG, C** ; **WANG, L.** ; **WU, G.** Mixformer: end-to-end tracking with iterative mixed attention.. *Proceedings of the IEEE/CVF Conference on Computer Vision and Pattern Recognition*, 2022, 13608-13618
- **DEMOUSTIER, M.** ; **ZHANG, Y.** ; **MURTHY, V.N.** ; **GHESU, F.C.** ; **COMANICIU, D.** Contrack: contextual transformer for device tracking in x-ray.. *arXiv:2307.07541*, 2023
- Cract: Cascaded regression-align-classification for robust tracking.. **FAN, H.** ; **LING, H.** 2021 IEEE/RSJ International Conference on Intelligent Robots and Systems. IEEE, 2021, 7013-7020
- **FEICHTENHOFER, C.** ; **FAN, H.** ; **XIONG, B.** ; **GIRSHICK, R.** ; **HE, K.** A large-scale study on unsupervised spatiotemporal representation learning.. *Proceedings of the IEEE/CVF Conference on Computer Vision and Pattern Recognition*, 2021, 3299-3309
- **FEICHTENHOFER, C.** ; **LI, Y.** ; **HE, K. et al.** Masked autoencoders as spatiotemporal learners.. *Advances in neural information processing systems*, 2022, vol. 35, 35946-35958
- **FIGINI, F.** ; **LOUVARD, Y.** ; **SHEIBAN, I.** Use of stent enhancement technique during percutaneous coronary intervention-a case series.. *Heart International*, 2019, vol. 13 (1), 28
- Robust landmarkbased stent tracking in x-ray fluoroscopy. **HUANG, L.** ; **LIU, Y.** ; **CHEN, L.** ; **CHEN, E.Z.** ; **CHEN, X.** ; **SUN, S.** European Conference on Computer Vision.. Springer, 2022, 201-216
- **LI, B** ; **YAN, J** ; **WU, W.** ; **ZHU, Z.** ; **HU, X.** High performance visual tracking with siamese region proposal network. *Proceedings of the IEEE conference on computer vision and pattern recognition*, 2018, 8971-8980

- Cycle ynet: semisupervised tracking of 3d anatomical landmarks.. **LIN, J.** ; **ZHANG, Y.** ; **AMADOU, A.A.** ; **VOIGT, I.** ; **MANSI, T.** ; **LIAO, R.** Machine Learning in Medical Imaging: 11th International Workshop, MLMI 2020, Held in Conjunction with MICCAI 2020, Lima, Peru. Springer, 04 October 2020, vol. 11, 593-602
- **LIN, L.** ; **FAN, H.** ; **ZHANG, Z.** ; **XU, Y.** ; **LING, H.** Swintrack: a simple and strong baseline for transformer tracking.. *Advances in Neural Information Processing Systems*, 2022, vol. 35, 16743-16754
- **MA, H.** ; **SMAL, I.** ; **DAEMEN, J.** ; **VAN WALSUM, T.** Dynamic coronary roadmapping via catheter tip tracking in x-ray fluoroscopy with deep learning based Bayesian filtering.. *Medical image analysis*, 2020, vol. 61, 101634
- **PARK, N.** ; **KIM, W.** ; **HEO, B.** ; **KIM, T.** ; **YUN, S.** What do self-supervised vision transformers learn?. *arXiv:2305.00729*, 2023
- **QIAN, R.** ; **MENG, T** ; **GONG, B.** ; **YANG, M.H.** ; **WANG, H.** ; **BELONGIE, S.** ; **CUI, Y.** Spatiotemporal contrastive video representation learning.. *Proceedings of the IEEE/CVF Conference on Computer Vision and Pattern Recognition.*, 2021, 6964-6974
- **TONG, Z.** ; **SONG, Y.** ; **WANG, J.** ; **WANG, L.** Videomae: masked autoencoders are dataefficient learners for self-supervised video pre-training.. *Advances in neural information processing systems*, 2022, vol. 35, 10078-10093
- **WEI, X.** ; **BAI, Y.** ; **ZHENG, Y.** ; **SHI, D.** ; **GONG, Y.** Autoregressive visual tracking.. *Proceedings of the IEEE/CVF Conference on Computer Vision and Pattern Recognition.*, 2023, 9697-9706
- **YAN, B.** ; **PENG, H.** ; **FU, J.** ; **WANG, D.** ; **LU, H.** Learning spatio-temporal transformer for visual tracking.. *Proceedings of the IEEE/CVF international conference on computer vision.*, 2021, 10448-10457
- **YU, Y.** ; **XIONG, Y.** ; **HUANG, W** ; **SCOTT, M.R.** Deformable siamese attention networks for visual object tracking.. *Proceedings of the IEEE/CVF conference on computer vision and pattern recognition*, 2020, 6728-6737

- **ZHANG, Z.** ; **LIU, Y.** ; **WANG, X.** ; **LI, B.** ; **HU, W.** Learn to match: automatic matching network design for visual tracking.. *Proceedings of the IEEE/CVF International Conference on Computer Vision.*, 2021, 13339-13348